# EUROPEAN PATENT APPLICATION

(11) **EP 4 253 067 A1**
(43) Date of publication of application: **04.10.2023**
(21) Application number: 23165145.6
(22) Date of filing: 29.03.2023
(51) Int. Cl.: B41J 2/175

(54) **LIQUID SURFACE DETECTING DEVICE AND LIQUID SURFACE DETECTING METHOD**

(30) Priority: 30.03.2022 JP 2022057569
(71) Applicant: Brother Kogyo Kabushiki Kaisha, Nagoya, Aichi 467-8561 (JP)
(72) Inventor: ZHENG, Jie, Nagoya, 467-8562 (JP); YOSHIDA, Masaya, Nagoya, 467-8562 (JP)
(74) Representative: J A Kemp LLP

(57) **Abstract**

There is provided a liquid surface detecting device (SD) for detecting a surface of a liquid in an internal space of a container, including: detecting electrodes (TE, ME, BE) positioned in an external space of the container or in the internal space; and a controller (700). The internal space includes a first area and a second area below the first area. The detecting electrodes include: a first detecting electrode extending between upper and lower ends of the first area, to output a first electrostatic capacity value; and a second detecting electrode extending between upper and lower ends of the second area, to output a second electrostatic capacity value. The controller is configured to determine presence or absence of a temporal variation of the first electrostatic capacity value and presence or absence of a temporal variation of the second electrostatic capacity value.

## Description

### TECHNICAL FIELD

The present invention relates to a liquid surface detecting device and a liquid surface detecting method.

### BACKGROUND ART

An ink-jet printer is used, in which an image is formed on a medium by discharging (jetting) a liquid from an ink-jet head. In order to continuously perform satisfactory image formation with the ink-jet printer as described above, it is desirable to detect the amount of an ink contained in an ink tank.

Patent Literature 1 discloses an electrostatic capacity (capacitance) type remaining amount detection sensor which is arranged on the outer side of an ink tank to detect the remaining amount of an ink contained in the ink tank.

### [Citation List]

### [Patent Literature]

Patent Literature 1: Japanese Patent Application Laid-Open No. JP2008-230227

### SUMMARY

### [Technical problem]

In this context, the remaining amount detection sensor disclosed in Patent Literature 1 is configured such that the liquid surface position is detected by using the electrostatic capacity measured by a detecting electrode and the electrostatic capacity of a reference capacitor (Patent Literature 1, Paragraph 0024). In order to detect the liquid surface position at a sufficient accuracy, the remaining amount detection sensor as described above requires time and labor to perform the initial setting for every individual product of the sensor.

Specifically, it is necessary to perform the initial setting for every individual product in order to decide the electrostatic capacity of the reference capacitor on the basis of the parameters in relation to, for example, the size or dimension of the ink tank and the area (square measure) of the detecting electrode, for the following reason. That is, the parameters differ for every individual product on account of, for example, any manufacturing error. Further, the dielectric constant differs depending on the type of the liquid as the detection target. Therefore, when the electrostatic capacity of the reference capacitor is decided, it is also necessary to consider the type of the liquid as the detection target.

Therefore, it is impossible to affirm that the remaining amount detection sensor disclosed in Patent Literature 1 has the high production efficiency.

In view of the above, an object of the present invention is to provide a liquid surface detecting device which can be efficiently produced. Another object of the present invention is to provide a liquid surface detecting method which requires little time and labor for the initial setting and which can be carried out with ease.

### [Solution to the problem]

According to a first aspect of the present invention, there is provided a liquid surface detecting device for detecting a surface of a liquid retained in an internal space of a container, the liquid surface detecting device including:
a plurality of detecting electrodes each positioned in an external space of the container or in the internal space of the container; and
a controller connected to each of the plurality of detecting electrodes, wherein:
   the internal space includes a first area and a second area defined below the first area;
   the plurality of detecting electrodes includes:
      a first detecting electrode extending at least between an upper end of the first area and a lower end of the first area, the first detecting electrode being configured to output a first electrostatic capacity value depending on a position of the surface of the liquid; and
      a second detecting electrode extending at least between an upper end of the second area and a lower end of the second area, the second detecting electrode being configured to output a second electrostatic capacity value depending on the position of the surface of the liquid; and
the controller is configured to determine presence or absence of a temporal variation of the first electrostatic capacity value and presence or absence of a temporal variation of the second electrostatic capacity value.

According to a second aspect of the present invention, there is provided a liquid surface detecting method for detecting a surface of a liquid retained in an internal space of a container, by a controller connected to a first detecting electrode and a second detecting electrode, the internal space including a first area and a second area defined below the first area, the liquid surface detecting method including:
determining presence or absence of a temporal variation of a first electrostatic capacity value depending on a position of the surface of the liquid, the first electrostatic capacity value being outputted by the first detecting electrode positioned in an external space of the container or in the internal space of the container, the first detecting electrode extending at least between an upper end of the first area and a lower end of the first area; and
determining presence or absence of a temporal variation of a second electrostatic capacity value depending on the position of the surface of the liquid, the second electrostatic capacity value being outputted by the second detecting electrode positioned in the external space of the container or in the internal space of the container, the second detecting electrode extending at least between an upper end of the second area and a lower end of the second area.

### [Advantageous Effect of the Invention]

Any person, who produces the liquid surface detecting device of the present invention, can efficiently produce the liquid surface detecting device of the present invention. Further, any person, who carries out the liquid surface detecting method of the present invention, can carry out the liquid surface detecting method of the present invention with ease while performing the initial setting with little time and labor.

### BRIEF DESCRIPTION OF THE DRAWINGS

FIG. 1 is a view of schematic configuration of a printing apparatus according to an embodiment.
FIG. 2 is a perspective view of a head system.
FIG. 3 is a side view of a casing of the head system.
FIG. 4 is an exploded perspective view of a subtank.
FIG. 5 is a bottom view of the subtank.
FIG. 6 is a perspective view of those disposed in the vicinity of a right end portion of the subtank and a liquid surface detecting unit attached to the subtank.
FIG. 7A is a plan view depicting a situation of electrodes and wirings formed on a solder surface of a base substrate of the liquid surface detecting unit. FIG. 7B is a plan view depicting a situation of wirings formed on an inner layer of the base substrate of the liquid surface detecting unit. FIG. 7C is a plan view depicting a situation of electrodes formed on a parts surface of the base substrate of the liquid surface detecting unit.
FIG. 8 is a side view depicting arrangement of a top detecting electrode, a middle detecting electrode, and a bottom detecting electrode for an internal space of a fill tank.
FIG. 9 is a perspective view of a head mechanism.
FIG. 10 is a plan view of a head.
FIG. 11 is a sectional view taken along a line XI-XI depicted in FIG. 10.
FIG. 12 is a schematic explanatory drawing depicting channel configuration of HPM (Hydraulic Pneumatics Module).
FIG. 13 is a flow chart depicting a liquid surface detecting method according to a modification.
FIG. 14A and FIG. 14B are side views each depicting arrangement of a top detecting electrode, a middle detecting electrode, and a bottom detecting electrode of a liquid surface detecting unit of a modification for internal spaces of a fill tank and a drain tank.
FIG. 15A and FIG. 15B are side views each depicting arrangement of a top detecting electrode, a middle detecting electrode, and a bottom detecting electrode of a liquid surface detecting unit of another modification for internal spaces of a fill tank and a drain tank.
FIG. 16A and FIG. 16B are side views each depicting arrangement of a top detecting electrode, a middle detecting electrode, and a bottom detecting electrode of a liquid surface detecting unit of still another modification for internal spaces of a fill tank and a drain tank.

### DESCRIPTION OF THE EMBODIMENTS

### [Embodiment]

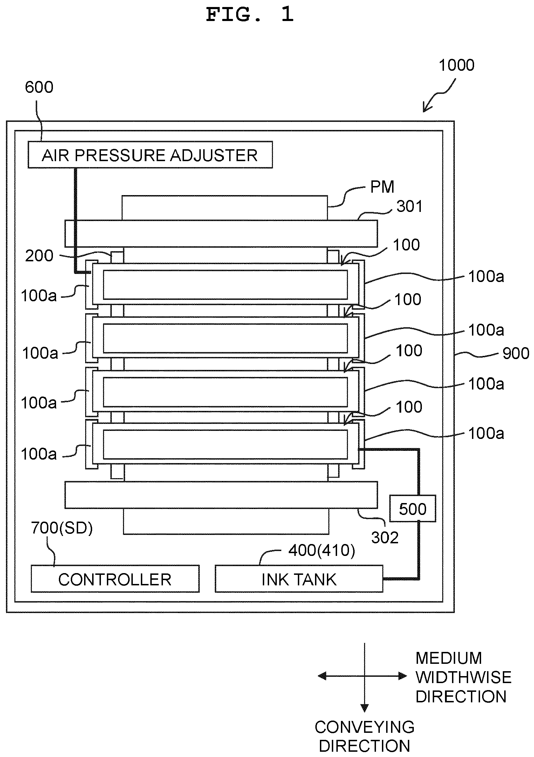

A head system 100 and a printer (printing apparatus) 1000 according to an embodiment will be explained with reference to FIG. 1 to FIG. 12.

### <Printer 1000>

As depicted in FIG. 1, the printer 1000 principally includes four head systems 100, a platen 200, a pair of conveying rollers 301, 302, an ink tank 400, HPMs (Hydraulic Pneumatics Modules) 500, air pressure (pneumatic pressure) adjusters 600, a controller 700, and a casing 900 which accommodates these components.

In relation to the printer 1000, the direction in which the pair of conveying rollers 301, 302 are aligned, i.e. the direction in which a medium PM is conveyed when an image is formed is referred to as "conveying direction". Further, the direction, which extends in the horizontal plane and which is orthogonal to the conveying direction, is referred to as "medium widthwise direction".

The four head systems 100 are so-called line type heads (head bars) respectively, and they are supported by a frame 100a at both end portions in the medium widthwise direction. Specified structure and function of the head system 100 will be described later on.

The frame 100a supports the four head systems 100 such that the front-back direction of each of the four head systems 100 (described later on) is coincident with the conveying direction of the printer 1000, and nozzle surfaces 40n of the four head systems 100 (described later on) are opposed to the upper surface of the platen 200.

The platen 200 is a plate-shaped member which supports the medium PM on the side (downward side) opposite to the head systems 100, when inks are discharged (ejected) from the head systems 100 to the medium PM.

The pair of conveying rollers 301, 302 are arranged while interposing the platen 200 in the conveying direction. The pair of conveying rollers 301, 302 function as a conveying apparatus for sending or feeding the medium PM in the conveying direction in a predetermined form when the head systems 100 form the image on the medium PM.

The ink tank 400 is comparted into four main tanks 410 so that the four color inks can be accommodated. Each of the four main tanks 410 is connected to one of the four head systems 100 by means of HPM 500.

One HPM 500 is provided in order to connect one main tank 410 and one head system 100. Four HPMs 500 are provided in total (only one HPM 500 is representatively depicted in FIG. 1). Specified structure and function of HPM 500 will be described later on.

In this embodiment, the mutually different four types of inks are stored in the four main tanks respectively. Each of the four head systems 100 discharges any one of the mutually different four types of inks. The four types of inks are, for example, cyan ink, magenta ink, yellow ink, and black ink.

The air pressure adjuster 600 is a mechanism for adjusting the pressure in a subtank 20 (described later on) of the head system 100. The air pressure adjuster 600 is, for example, a pump. One air pressure adjuster 600 is provided for one head system 100 one by one. That is, the four air pressure adjusters 600 are provided in total (only one air pressure adjuster 600 is representatively depicted in FIG. 1).

The controller 700 entirely controls the respective parts or components provided for the printer 1000, and thus the controller 700 allows the respective parts or components to perform, for example, the image formation on the medium PM. The controller 700 includes, for example, FPGA (Field Programmable Gate Array), EEPROM (Electrically Erasable Programmable Read-Only Memory), and RAM (Random Access Memory). Note that the controller 700 may include, for example, CPU (Central Processing Unit) or ASIC (Application Specific Integrated Circuit). The controller 700 is connected to an external apparatus such as PC or the like (not depicted) so that the data communication can be performed, and the controller 700 controls respective parts or components of the printer 1000 on the basis of printing data sent or fed from the external apparatus.

### <Head system 100>

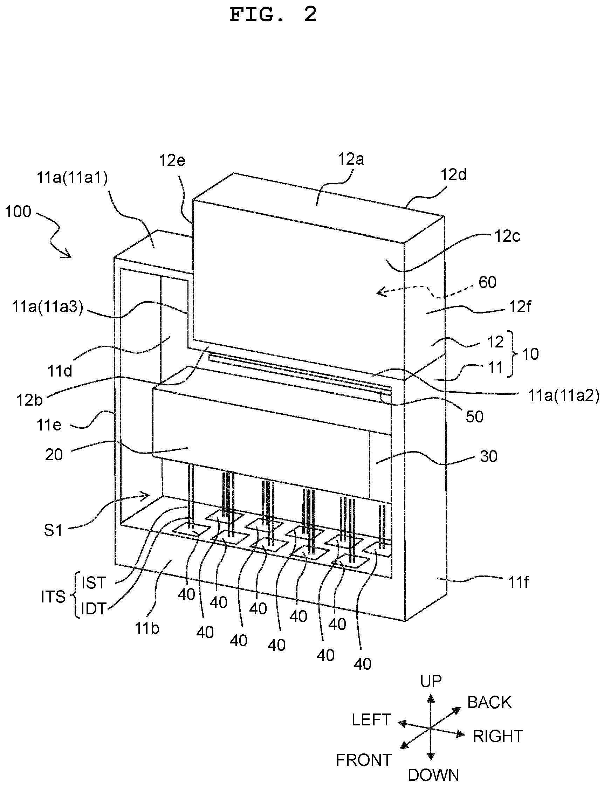

As depicted in FIG. 2, each of the four head systems 100 principally includes a casing 10, the subtank 20, a liquid surface detecting unit 30, ten head mechanisms 40 which are aligned in a zigzag form, a relay substrate 50, and a control substrate unit 60. The four head systems 100 are configured mutually identically. Therefore, in the following description, an explanation will be made regarding one of the four head systems 100.

In the following explanation, the direction, in which the ten head mechanisms 40 are arranged in the zigzag form (zigzag configuration), is referred to as the widthwise direction of the head system 100. The direction, in which the ten head mechanisms 40 and the subtank 20 are aligned, is referred to as the up-down direction. Further, the direction, which is orthogonal to the widthwise direction and the up-down direction, is referred to as the front-back direction of the head system 100.

As for the front-back direction, the frontward side and the backward side of the paper surface of FIG. 2 are designated as the front side and the back side in the front-back direction. As for the widthwise direction, the left side and the right side, which are viewed from the front side in the front-back direction, are designated as the left side and the right side. As for the up-down direction, the side, on which the subtank 20 is positioned with respect to the ten head mechanisms 40, is designated as the upper side, and the side, which is opposite thereto, is designated as the lower side.

Note that in a state in which the head system 100 is installed in the printer 1000, the widthwise direction of the head system 100 is coincident with the medium widthwise direction of the printer 1000, and the front-back direction of the head system 100 is coincident with the conveying direction of the printer 1000.

### <Casing 10>

The casing 10 may be formed of, for example, a metal. The casing 10 includes a first casing 11 and a second casing 12 which is detachable with respect to the first casing 11.

The first casing 11 has a top plate 11a, a bottom portion 11b, a front wall (not depicted in FIG. 2 in order to show the interior of the first casing 11), a back wall 11d, a left wall 11e, and a right wall 11f. A space S1, which is surrounded by the top plate 11a, the bottom portion 11b, the front wall, the back wall 11d, the left wall 11e, and the right wall 11f, is defined at the inside of the first casing 11.

The top plate 11a has a first area 11a1, a second area 11a2 which is positioned on the right of the first area 11a1, and a vertical area 11a3 which is disposed between the first area 11a1 and the second area 11a2. The first area 11a1 is positioned over or above the second area 11a2.

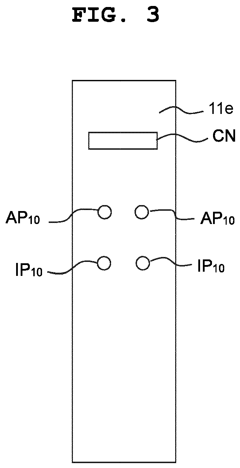

As depicted in FIG. 3, a power source connector CN is provided at an upper portion of the left wall 11e. Two air flow ports AP₁₀, which are aligned in the front-back direction, are provided under or below the power source connector CN. Two ink flow ports IP₁₀, which are aligned in the front-back direction, are provided under or below the two air flow ports AP₁₀. The power source connector CN, the two air flow ports AP₁₀, and the two ink flow ports IP₁₀ are omitted from the illustration of FIG. 2.

As depicted in FIG. 2, the second casing 12 has a top plate 12a, a bottom plate 12b, a front wall 12c, a back wall 12d, a left wall 12e, and a right wall 12f. In a state in which the second casing 12 is attached to the first casing 11, the bottom surface 12b of the second casing 12 abuts against the second area 11a2 of the top plate 11a of the first casing 11.

### <Subtank 20>

The subtank 20 receives and stores the ink supplied to the head system 100. The ink, which is stored in the subtank 20, is distributed to the plurality of head mechanisms 40 respectively.

As depicted in FIG. 2, the subtank 20 has a lengthy shape. The subtank 20 is arranged in the space S1 so that the longitudinal direction of the subtank 20 is coincident with the widthwise direction of the head system 100.

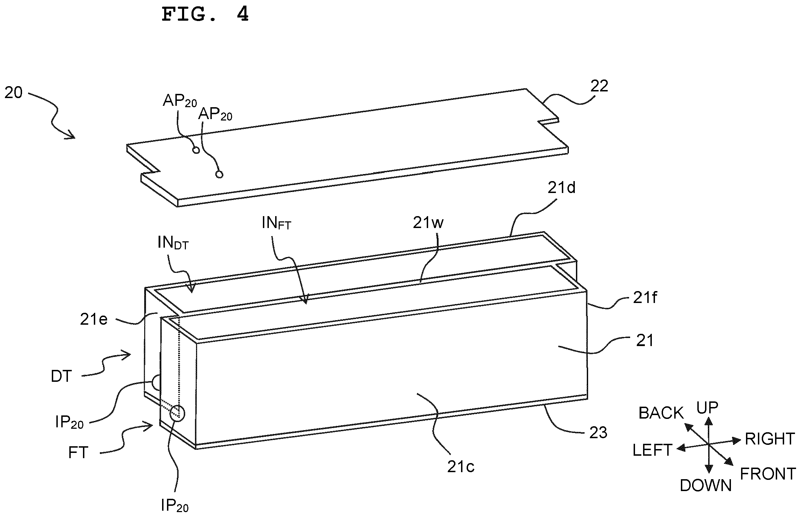

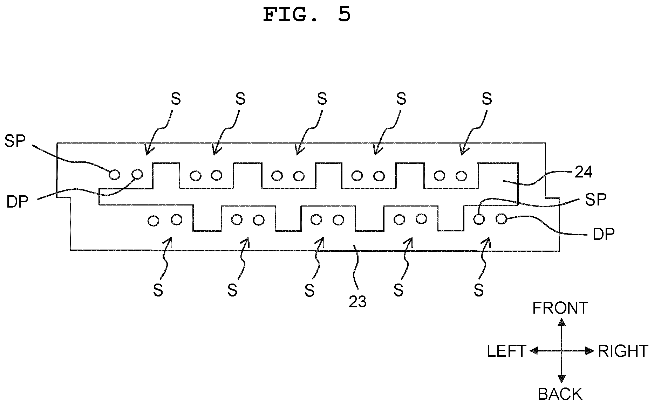

As depicted in FIG. 4 and FIG. 5, the subtank 20 is composed of a main body unit (main body) 21, a top plate 22, and a bottom plate 23. A heater 24 (FIG. 5) is stuck to the lower surface of the bottom plate 23.

The main body unit 21 is formed of, for example, a resin. The main body unit 21 has a front wall 21c and a back wall 21d which extend along a plane orthogonal to the front-back direction of the head system 100, and a left wall 21e and a right wall 21f which extend along a plane orthogonal to the widthwise direction of the head system 100. A separation wall 21w, which is parallel to the front wall 21c and the back wall 21d, is provided at the inside of the main body unit 21.

The top plate 22 is a flat plate which is formed of, for example, a metal. The shape of the top plate 22 as viewed in a plan view is the same as the shape of the contour of the main body unit 21 as viewed from an upper position. The top plate 22 is fixed to the upper end portion of the main body unit 21 with an undepicted seal rubber intervening therebetween.

The bottom plate 23 is a flat plate which is formed of a metal (for example, aluminum). The shape of the bottom plate 23 as viewed in a plan view is the same as the shape of the contour of the main body unit 21 as viewed from an upper position.

The bottom plate 23 is fixed to the lower end portion of the main body unit 21 with an undepicted seal rubber intervening therebetween.

As depicted in FIG. 4, a fill tank FT is configured in the subtank 20 by the front wall 21c, the separation wall 21w, the left wall 21e, and the right wall 21f of the main body unit 21; the top plate 22; and the bottom plate 23. Further, a drain tank DT is configured by the back wall 21d, the separation wall 21w, the left wall 21e, and the right wall 21f of the main body unit 21; the top plate 22; and the bottom plate 23. The internal space IN_{FT} of the fill tank FT and the internal space IN_{DT} of the drain tank DT are closed spaces respectively, and they are separated from each other.

Two ink flow ports IP₂₀ are formed on the left wall 21e while being aligned in the front-back direction. The front ink flow port IP₂₀ is communicated with the internal space IN_{FT} of the fill tank FT. The back ink flow port IP₂₀ is communicated with the internal space IN_{DT} of the drain tank DT.

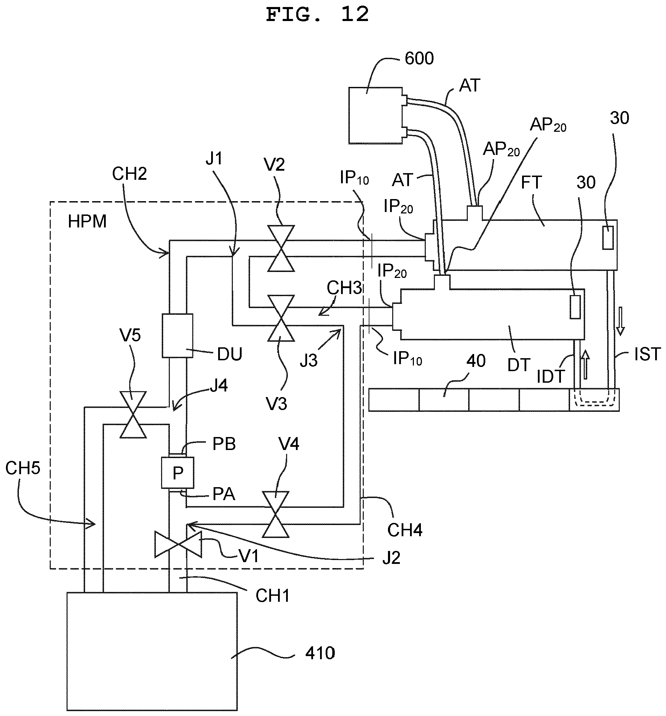

Two air flow ports AP₂₀ are formed on the top plate 22 while being aligned in the front-back direction. The front air flow port AP₂₀ is communicated with the internal space IN_{FT} of the fill tank FT. The back air flow port AP₂₀ is communicated with the internal space IN_{DT} of the drain tank DT. Further, as depicted in FIG. 12, the two air flow ports AP₂₀ are connected respectively to the air pressure adjuster 600 by tube passages AT via air flow ports AP₁₀ disposed on the back side of the casing 10.

Ten ink flow port sets S are provided on the lower surface of the bottom plate 23 (FIG. 5). Each of the ink flow port sets S includes one ink supply port SP and one ink discharge port DP. The ten ink flow port sets S are arranged in a zigzag form (zigzag configuration) in the widthwise direction of the head system 100. The ink supply port SP and the ink discharge port DP are aligned in the widthwise direction in each of the ink flow port sets S.

Owing to the channels (not depicted) formed at lower portions in the inner side of the main body unit 21, the internal space IN_{FT} of the fill tank FT is communicated with the ink supply port SP of each of the ink flow port sets S, and the internal space IN_{DT} of the drain tank DT is communicated with the ink discharge port DP of each of the ink flow port sets S.

### <Liquid surface detecting unit 30, liquid surface detecting device SD>

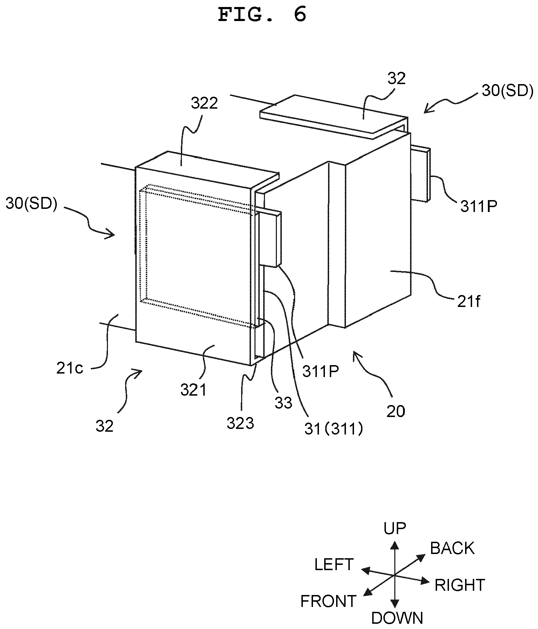

As depicted in FIG. 2 and FIG. 6, one liquid surface detecting unit 30 is attached to each of the front wall 21c and the back wall 21d disposed in the vicinity of the right end portion of the subtank 20. Note that in this embodiment, the liquid surface detecting device SD is configured by the two liquid surface detecting units 30 and the controller 700.

The liquid surface detecting unit 30, which is attached to the front wall 21c of the subtank 20, is provided in order to detect the position of the liquid surface of the ink accommodated in the internal space IN_{FT} of the fill tank FT. The liquid surface detecting unit 30, which is attached to the back wall 21d of the subtank 20, is provided in order to detect the position of the liquid surface of the ink accommodated in the internal space IN_{DT} of the drain tank DT.

The liquid surface detecting unit 30 attached to the front wall 21c of the subtank 20 is configured substantially identically with the liquid surface detecting unit 30 attached to the back wall 21d of the subtank 20. However, the structures and the arrangements of the respective constitutive components of the liquid surface detecting unit 30 attached to the front wall 21c of the subtank 20 is in mirror symmetry with respect to the structures and the arrangements of the respective constitutive components of the liquid surface detecting unit 30 attached to the back wall 21d of the subtank 20, on the basis of the plane orthogonal to the front-back direction. Here, an explanation will be made about the liquid surface detecting unit 30 attached to the front wall 21c of the subtank 20.

As depicted in FIG. 6, the liquid surface detecting unit 30 has a main body unit (main body) 31, a fixing plate 32 which fixes the main body unit 31 to the subtank 20, and a buffer member 33 which is arranged between the main body unit 31 and the fixing plate 32.

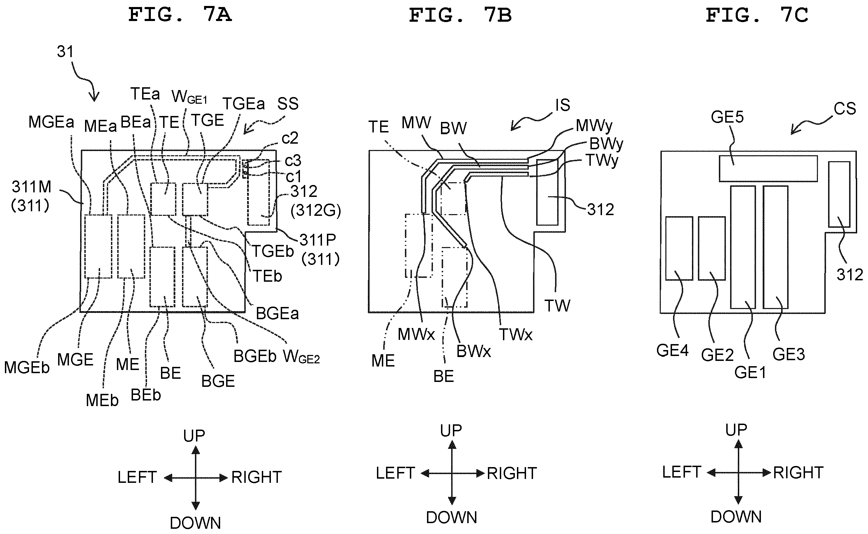

The main body unit 31 (FIG. 7A to FIG. 7C) principally has a base substrate 311, various terminals and various wirings which are formed on the base substrate 311 (details will be described later on), and a detection circuit 312 which is attached to the base substrate 311.

The base substrate 311 has a flat plate-shaped configuration. In the following explanation, the up-down direction and the left-right direction as viewed in the paper surface of FIG. 7A to FIG. 7C are designated as the up-down direction and the left-right direction of the base substrate 31 respectively. Further, as viewed in the paper surface of FIG. 7A to FIG. 7C, the surface on the back side and the surface on the front side are designated as the solder surface SS and the parts surface (components surface) CS of the base substrate 311, respectively. Note that FIG. 7A to FIG. 7C show the positions of various terminals and various wirings when the base substrate 310 is viewed from the side of the parts surface CS. That is, FIG. 7A to FIG. 7C are drawn as viewed in relation to the parts surface.

The base substrate 311 has a main portion 311M which is substantially square, and a protruding portion 311P which protrudes rightwardly from a substantially upper half area of the right side of the main portion 311M.

As depicted in FIG. 7A, those formed on the solder surface SS of the base substrate 311 include a top detecting electrode TE, a middle detecting electrode ME, and a bottom detecting electrode BE as well as a top guard electrode TGE, a middle guard electrode MGE, and a bottom guard electrode BGE which are adjacent to the top detecting electrode TE, the middle detecting electrode ME, and the bottom detecting electrode BE, respectively.

The top detecting electrode TE is arranged on an upper side from a vertical central portion of the main portion 311M of the base substrate 311, and at a substantially central portion in the left-right direction of the main portion 311M. The top detecting electrode TE is substantially square.

The middle detecting electrode ME is arranged at a lower left position of the top detecting electrode TE. The middle detecting electrode ME has a rectangular shape in which the up-down direction is the long-side direction and the left-right direction is the short-side direction.

The lower end TEb of the top detecting electrode TE is disposed at the same position in the up-down direction as the upper end MEa of the middle detecting electrode ME. The top detecting electrode TE and the middle detecting electrode ME are separated from each other while providing a gap in the left-right direction.

The bottom detecting electrode BE is arranged just under the top detecting electrode TE, at a lower right position of the middle detecting electrode ME. The bottom detecting electrode BE has a rectangular shape in which the up-down direction is the long-side direction and the left-right direction is the short-side direction.

The both end portions in the left-right direction of the top detecting electrode TE are disposed at the same positions in the left-right direction as the both end portions in the left-right direction of the bottom detecting electrode BE. The lower end TEb of the top detecting electrode TE is separated from the upper end BEa of the bottom detecting electrode BE, while providing a gap in the up-down direction. The upper end BEa of the bottom detecting electrode BE is positioned on the lower side of the upper end MEa of the middle detecting electrode ME and on the upper side of the lower end MEb of the middle detecting electrode ME. The lower end BEb of the bottom detecting electrode BE is positioned on the lower side of the lower end MEb of the middle detecting electrode ME. The middle detecting electrode ME and the bottom detecting electrode BE are separated from each other while providing a gap in the left-right direction.

The top guard electrode TGE is arranged on the right of the top detecting electrode TE, while providing a gap with respect to the top detecting electrode TE. The top guard electrode TGE is substantially square. The upper end TGEa and the lower end TGEb of the top guard electrode TGE are disposed at the same positions in the up-down direction as the upper end TEa and the lower end TEb of the top detecting electrode TE, respectively.

The middle guard electrode MGE is arranged on the left of the middle detecting electrode ME, while providing a gap with respect to the middle detecting electrode ME. The middle guard electrode MGE has a rectangular shape in which the up-down direction is the long-side direction and the left-right direction is the short-side direction. The upper end MGEa and the lower end MGEb of the middle guard electrode MGE are disposed at the same positions in the up-down direction as the upper end MEa and the lower end MEb of the middle detecting electrode ME, respectively.

The bottom guard electrode BGE is arranged on the right of the bottom detecting electrode BE, while providing a gap with respect to the bottom detecting electrode BE. The bottom guard electrode BGE has a rectangular shape in which the up-down direction is the long-side direction and the left-right direction is the short-side direction. The upper end BGEa and the lower end BGEb of the bottom guard electrode BGE are disposed at the same positions in the up-down direction as the upper end BEa and the lower end BEb of the bottom detecting electrode BE respectively.

The top guard electrode TGE and the middle guard electrode MGE are electrically connected to one another by means of a wiring W_{GE1}, and the top guard electrode TGE and the bottom guard electrode BGE are electrically connected to one another by means of a wiring W_{GE2}. The wiring W_{GE1} is electrically connected to the GND terminal (not depicted) of the detection circuit 312. Accordingly, the top guard electrode TGE, the middle guard electrode MGE, and the bottom guard electrode BGE are grounded. The top guard electrode TGE, the middle guard electrode MGE, and the bottom guard electrode BGE, which are grounded, shield the influence of the surrounding electric field change.

As depicted in FIG. 7B, a top wiring TW, a middle wiring MW, and a bottom wiring BW are formed at the inside (inner layer) IS of the base substrate 311. Note that in FIG. 7B, the positions of the top electrode TE, the middle electrode ME, and the bottom electrode BE when the base substrate 310 is viewed from the side of the parts surface CS are depicted by two-dot chain lines.

The top wiring TW is the wiring which electrically connects the top detecting electrode TE and the detection circuit 312. One end portion TWx of the top wiring TW is electrically connected to the upper end TEa of the top detecting electrode TE. The other end portion TWy of the top wiring TW is electrically connected to the connecting channel c1 (described later on) of the detection circuit 312. The top wiring TW has a portion which extends rightwardly upwardly from the end portion TWx, and a portion which extends horizontally in the rightward direction from the upper end portion of the concerning portion to arrive at the end portion TWy.

The middle wiring MW is the wiring which electrically connects the middle detecting electrode ME and the detection circuit 312. One end portion MWx of the middle wiring MW is electrically connected to the upper end MEa of the middle detecting electrode ME. The other end portion MWy of the middle wiring MW is electrically connected to the connecting channel c2 (described later on) of the detection circuit 312. The middle wiring MW has a portion which extends upwardly from the end portion MWx, a portion which extends rightwardly upwardly from the upper end portion of the concerning portion, and a portion which extends horizontally in the rightward direction from the upper end portion of the concerning portion to arrive at the end portion MWy.

The bottom wiring BW is the wiring which electrically connects the bottom detecting electrode BE and the detection circuit 312. One end portion BWx of the bottom wiring BW is electrically connected to the upper end BEa of the bottom detecting electrode BE. The other end portion BWy of the bottom wiring BW is electrically connected to the connecting channel c3 (described later on) of the detection circuit 312. The bottom wiring BW has a portion which extends leftwardly upwardly from the end portion BWx, a portion which extends upwardly from the upper end portion of the concerning portion, a portion which extends rightwardly upwardly from the upper end portion of the concerning portion, and a portion which extends horizontally in the rightward direction from the upper end portion of the concerning portion to arrive at the end portion BWy.

The portion, which extends leftwardly upwardly from the end portion BWx of the bottom wiring BW, is arranged to pass through the gap between the top detecting electrode TE and the middle detecting electrode ME as viewed in a plan view of the base substrate 311. The portion, which extends in the up-down direction of the bottom wiring BW, is arranged on the left of the top detecting electrode TE as viewed in a plan view of the base substrate 311.

The wiring length of the middle wiring MW is longer than the wiring length of the top wiring TW. The wiring length of the bottom wiring BW is longer than the wiring length of the middle wiring MW.

As depicted in FIG. 7C, a first guard electrode GE1, a second guard electrode GE2, a third guard electrode GE3, a fourth guard electrode GE4, and a fifth guard electrode GE5 are formed on the parts surface CS of the base substrate 311. Each of the first guard electrode GE1 to the fourth guard electrode GE4 has a rectangular shape in which the up-down direction is the long-side direction and the left-right direction is the short-side direction. The fifth guard electrode GE5 has a rectangular shape in which the up-down direction is the short-side direction and the left-right direction is the long-side direction. The first guard electrode GE1 to the fifth guard electrode GE5 are each electrically connected to the GND terminal (not depicted) of the detection circuit 312 by means of undepicted wiring, and thus they are grounded. The first guard electrode GE1 to the fifth guard electrode GE5, which are grounded, shield the influence of the surrounding electric field change.

The first guard electrode GE1 is formed to be overlapped with the top detecting electrode TE and the bottom detecting electrode BE as viewed in a plan view of the base substrate 311. The second guard electrode GE2 is formed to be overlapped with the middle detecting electrode ME as viewed in a plan view of the base substrate 311. The third guard electrode GE3 is formed to be overlapped with the top guard electrode TGE and the bottom guard electrode BGE as viewed in a plan view of the base substrate 311. The fourth guard electrode GE4 is formed to be overlapped with the middle guard electrode MGE as viewed in a plan view of the base substrate 311. The fifth guard electrode GE5 is provided to be overlapped with at least parts (specifically, portions extending in the left-right direction of the respective wirings) of the top wiring TW, the middle wiring MW, and the bottom wiring BW respectively as viewed in a plan view of the base substrate 311.

The detection circuit 312 is the circuit which detects the electrostatic capacity value depending on the position of the liquid surface of the ink (detailed will be described later on) outputted from each of the top detecting electrode TE, the middle detecting electrode ME, and the bottom detecting electrode BE. The detection circuit 312 is mounted on the protruding portion 311P of the base substrate 311. The detection circuit 312 is connected to the controller 700 by means of an undepicted wiring.

The detection circuit 312 has three connecting channels c1, c2, c3 to which the wirings from the outside are connected, and a GND layer 312G which functions as the digital ground. That is, the detection circuit 312 is grounded.

As described above, the top wiring TW, the middle wiring MW, and the bottom wiring BW are connected to the connecting channels c1, c2, c3, respectively.

The fixing plate 32 has a flat plate-shaped pressing plate 321, a flat plate-shaped upper attachment portion 322 which extends upstandingly from the upper end of the pressing plate 321, and a flat plate-shaped lower attachment portion 323 which extends upstandingly from the lower end of the pressing plate 321. The fixing plate 32 is formed of, for example, a metal.

The buffer member 33 is a flat plate-shaped elastic member, which is formed of, for example, rubber sponge.

As depicted in FIG. 6, the liquid surface detecting unit 30 for the fill tank FT is fixed to the subtank 20 by means of the fixing plate 32 in a state in which the solder surface SS of the base substrate 311 is allowed to abut against the front surface (outer surface) of the front wall 21c of the subtank 20. The fixing plate 32 is attached to the subtank 20 by the aid of the upper attachment portion 322 and the lower attachment portion 323. The main body unit 31 is pressed toward the front wall 21c by means of the pressing plate 321. The buffer member 33 is arranged between the pressing plate 321 and the parts surface CS of the base substrate 311.

In the same manner as described above, the liquid surface detecting unit 30 for the drain tank DT is also fixed to the subtank 20 in a state in which the solder surface SS of the base substrate 311 is allowed to abut against the back surface (outer surface) of the back wall 21d of the subtank 20.

In this way, the solder surface SS of the base substrate 311 is pressed against the subtank 20 by means of the fixing plate 32. Accordingly, the formation of any air layer is suppressed between the top detecting electrode TE, the middle detecting electrode ME, and the base detecting electrode BE which are disposed on the solder surface SS and the front surface 21c and the back surface 21d which belong to the subtank 20. Thus, it is possible to raise the accuracy of the liquid surface detection performed by the liquid surface detecting unit 30.

Each of the liquid surface detecting unit 30 for the fill tank FT and the liquid surface detecting unit 30 for the drain tank DT is attached to the subtank 20 while allowing the up-down direction and the left-right direction of the base substrate 311 to coincide with the up-down direction and the left-right direction of the subtank 20, respectively.

The base substrate 311 is attached to the subtank 20 so that the protruding portion 311P is positioned on the outer side of the outer edge of the subtank 20 (more specifically, the outer edge of the surface against which the main body unit 31 abuts) as viewed in the plate thickness direction of the base substrate 311 (in the front-back direction of the subtank 20). Therefore, the detection circuit 312 is also positioned on the outer side of the outer edge of the subtank 20 as viewed in the plate thickness direction of the base substrate 311. Accordingly, the influence, which is exerted on the driving of the detection circuit 312 by the displacement of the liquid surface in each of the internal spaces IN_{FT}, IN_{DT} of the fill tank FT and the drain tank DT, is reduced. Therefore, it is possible to raise the detection accuracy.

In this section, the principle of the liquid surface detection performed by the liquid surface detecting device SD will be explained as exemplified by an exemplary case in which the liquid surface position of the ink in the internal space IN_{FT} of the fill tank FT is detected by means of the liquid surface detecting device SD. The following explanation is also similarly or equivalently applied to the detection of the liquid surface position of the ink contained in the internal space IN_{DT} of the drain tank DT.

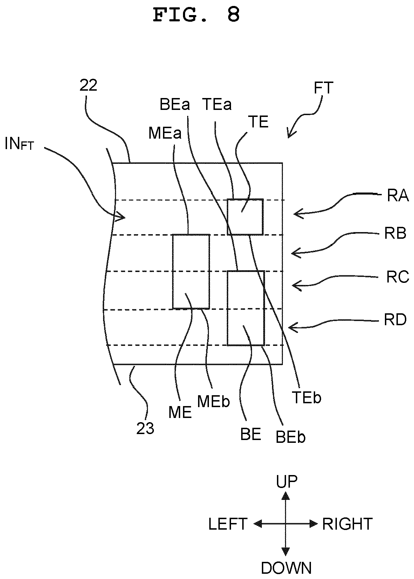

The liquid surface detecting device SD of this embodiment is configured to detect in what area of a plurality of areas obtained by segmenting (comparting) the internal space IN_{FT} in the up-down direction the liquid surface of the ink accommodated in the internal space IN_{FT} is positioned. The plurality of areas is the plurality of areas which are aligned in the up-down direction. The segments are defined, for example, by a designer of the liquid surface detecting device SD upon the design of the liquid surface detecting device SD. Specifically, the liquid surface detecting device SD is configured to detect in what area of the area RA, the area RB, the area RC, and the area RD obtained by segmenting the internal space IN_{FT} in the up-down direction the liquid surface of the ink is positioned (FIG. 8).

The area RA is the area which is disposed on the uppermost side. Only the top detecting electrode TE of the liquid surface detection sensor SD is arranged at the position corresponding to the area RA in the up-down direction. Based on the liquid surface detection sensor SD as the reference, the area RA is the area which is positioned under or below the upper end TEa of the top detecting electrode TE and over or above the lower end TEb of the top detecting electrode TE and the upper end MEa of the middle detecting electrode ME.

In this embodiment, the air flow ports AP₂₀ are formed through the top plate 22 of the subtank 20. That is, the air flow port AP₂₀ is positioned further upwardly from the upper end of the area RA. When the liquid surface of the ink is positioned in the area RA, the situation is approximately in such a state that the ink fulfills the internal space IN_{FT}. The fear of entrance of the ink into the air flow ports AP₂₀ is relatively large. The area RA may be also referred to as "full area".

The area RB is the area which is disposed on the lower side of the area RA. Only the middle detecting electrode ME of the liquid surface detection sensor SD is arranged at the position corresponding to the area RB in the up-down direction. Based on the liquid surface detection sensor SD as the reference, the area RB is the area which is positioned under or below the lower end TEb of the top detecting electrode TE and the upper end MEa of the middle detecting electrode ME and over or above the upper end BEa of the bottom detecting electrode BE. When the liquid surface of the ink is positioned in the area RB, the ink contained in the internal space IN_{FT} is in a relatively large amount. Therefore, the area RB may be also referred to as "high area".

The area RC is the area which is disposed on the lower side of the area RB. The middle detecting electrode ME and the bottom detecting electrode BE of the liquid surface detection sensor SD are arranged at the positions corresponding to the area RC in the up-down direction. Based on the liquid surface detection sensor SD as the reference, the area RC is the area which is positioned under or below the upper end BEa of the bottom detecting electrode BE and over or above the lower end MEb of the middle detecting electrode ME. When the liquid surface of the ink is positioned in the area RC, the ink contained in the internal space IN_{FT} is in a relatively small amount. Therefore, the area RC may be also referred to as "low area".

The area RD is the area which is disposed on the lower side of the area RC. Only the bottom detecting electrode BE of the liquid surface detection sensor SD is arranged at the position corresponding to the area RD in the up-down direction. Based on the liquid surface detection sensor SD as the reference, the area RD is the area which is disposed under or below the lower end MEb of the middle detecting electrode ME and over or above the lower end BEb of the bottom detecting electrode BE.

In this embodiment, the ink supply ports SP are formed on the bottom plate 23 of the subtank 20. That is, the ink supply port SP is positioned further downwardly from the lower end of the area RD. When the liquid surface of the ink is positioned in the area RD, the situation is approximately in such a state that the ink does not exist in the internal space IN_{FT}. The fear of entrance of the air into the ink supply ports SP is relatively large. The area RD may be also referred to as "empty area".

Note that the correspondence between the respective detecting electrodes and the respective areas is described as follows on the basis of the areas RA to RD. That is, the top detecting electrode TE extends between the upper end and the lower end of the area RA, the middle detecting electrode ME extends between the upper end of the area RB and the lower end of the area RC, and the bottom detecting electrode BE extends between the upper end of the area RC and the lower end of the area RD.

In the state in which the solder surface SS of the base substrate 311 abuts against the front wall 21c of the subtank 20, the top detecting electrode TE forms a pseudo-capacitor together with the grounded metal surface positioned in the vicinity thereof. The grounded metal surface as described above is, for example, the fixing plate 32 and the GND layer 312G of the detection circuit 312 (the fixing plate 32 is grounded via the top plate 22 and the bottom plate 23 of the subtank 20).

The dielectric constant of the ink and the dielectric constant of the air are different from each other. Therefore, when the liquid surface of the ink is displaced in the internal space IN_{FT} in the area (i.e., in the area RA) in which the top detecting electrode TE exists in the up-down direction, then the electrostatic capacity of the pseudo-capacitor changes, and the electrostatic capacity value EC_{T} outputted by the top detecting electrode TE changes.

Similarly, the middle detecting electrode ME also forms a pseudo-capacitor together with the fixing plate 32 and the GND layer 312G of the detection circuit 312. When the liquid surface of the ink is displaced in the internal space IN_{FT} in the area (i.e., in the area RB, the area RC) in which the middle detecting electrode ME exists in the up-down direction, the electrostatic capacity value EC_{M} outputted by the middle detecting electrode ME changes. Further, the bottom detecting electrode BE also forms a pseudo-capacitor together with the fixing plate 32 and the GND layer 312G of the detection circuit 312. When the liquid surface of the ink is displaced in the internal space IN_{FT} in the area (i.e., in the area RC, the area RD) in which the bottom detecting electrode BE exists in the up-down direction, the electrostatic capacity value EC_{B} outputted by the bottom detecting electrode BE changes.

The electrostatic capacity values EC_{T}, EC_{M}, EC_{B}, which are outputted from the top detecting electrode TE, the middle detecting electrode ME, and the bottom detecting electrode BE, respectively, are successively sent at a predetermined cycle by the detection circuit 312 to the controller 700. Specifically, for example, the detection circuit 312 constitutes an oscillation circuit including the pseudo-capacitor formed by the top detecting electrode TE, and the electrostatic capacity value EC_{T} is outputted as the change in the oscillation frequency of the oscillation circuit to the controller 700. Similarly, the detection circuit 312 constitutes an oscillation circuit including the pseudo-capacitor formed by the middle detecting electrode ME, and the electrostatic capacity value EC_{M} is outputted as the change in the oscillation frequency of the oscillation circuit to the controller 700. Further, the detection circuit 312 constitutes an oscillation circuit including the pseudo-capacitor formed by the bottom detecting electrode BE, and the electrostatic capacity value EC_{B} is outputted as the change in the oscillation frequency of the oscillation circuit to the controller 700.

The controller 700 determines the presence or absence of any temporal (time-dependent) variation (change) for each of the electrostatic capacity values EC_{T}, EC_{M}, EC_{B}. Specifically, for example, the controller 700 calculates the differences between certain electrostatic capacity values EC_{T}, EC_{M}, EC_{B} received at a certain time and the electrostatic capacity values EC_{T}, EC_{M}, EC_{B} received next to the certain electrostatic capacity values EC_{T}, EC_{M}, EC_{B}, respectively. If the calculated difference is larger than a predetermined threshold value, the controller 700 determines that the electrostatic capacity value EC_{T}, EC_{M}, or EC_{B} changes.

In another case, if the difference between certain electrostatic capacity values EC_{T}, EC_{M}, EC_{B} which is successively received and the electrostatic capacity values EC_{T}, EC_{M}, EC_{B} which has been received just before the certain electrostatic capacity values EC_{T}, EC_{M}, EC_{B} is larger than a predetermined threshold value continuously a predetermined number of times (for example, three times), the controller 700 determines that the electrostatic capacity value EC_{T}, EC_{M}, or EC_{B} changes. Further, the dielectric constant of the ink differs depending on the type of the ink. Therefore, the predetermined threshold value may be any different value depending on the type of the ink.

If only the electrostatic capacity value EC_{T}, which is outputted by the top detecting electrode TE, temporally changes, the controller 700 determines that the liquid surface is positioned in the area RA. If only the electrostatic capacity value EC_{T}, which is outputted by the middle detecting electrode ME, temporally changes, the controller 700 determines that the liquid surface is positioned in the area RB. If the electrostatic capacity value EC_{M} which is outputted by the middle detecting electrode ME and the electrostatic capacity value EC_{B} which is outputted by the bottom detecting electrode BE temporally change, the controller 700 determines that the liquid surface is positioned in the area RC. If only the electrostatic capacity value EC_{B}, which is outputted by the bottom detecting electrode BE, temporally changes, the controller 700 determines that the liquid surface is positioned in the area RD.

### <Head mechanism 40>

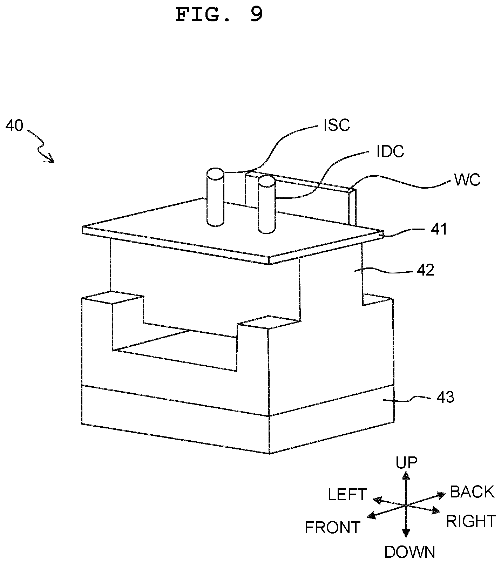

As depicted in FIG. 9, each of the ten head mechanisms 40 configured identically with each other has a connecting plate 41, a main body unit (main body) 42, and a head 43 as referred to in this order from the top. The head mechanism 40 further has a wiring connecting portion WC which extends, in up-down direction, between the position disposed over or above the connecting plate 41 and the head 43.

The connecting plate 41 is provided with an ink supply tube connecting portion ISC and an ink discharge tube connecting portion IDC.

The main body unit 42 is fixed to the lower surface of the connecting plate 41. The main body unit 42 internally has a channel which supplies the ink supplied to the ink supply tube connecting portion ISC to the head 43, and a channel which returns the ink not discharged from the head 43 to the ink discharge tube connecting portion IDS.

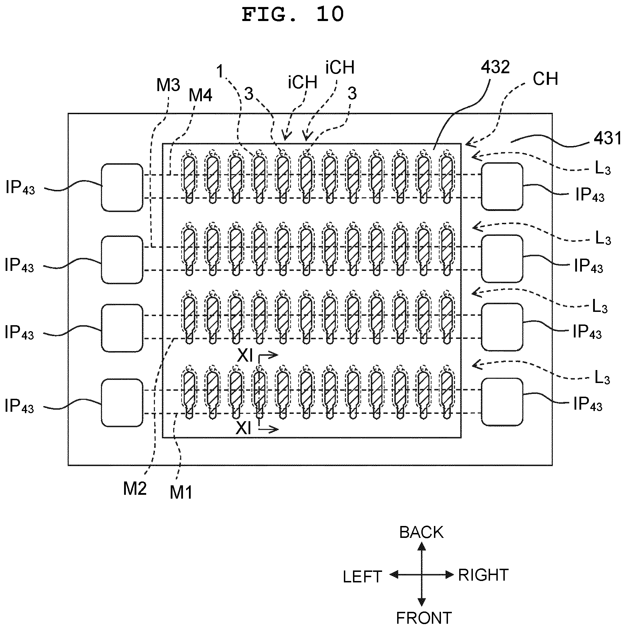

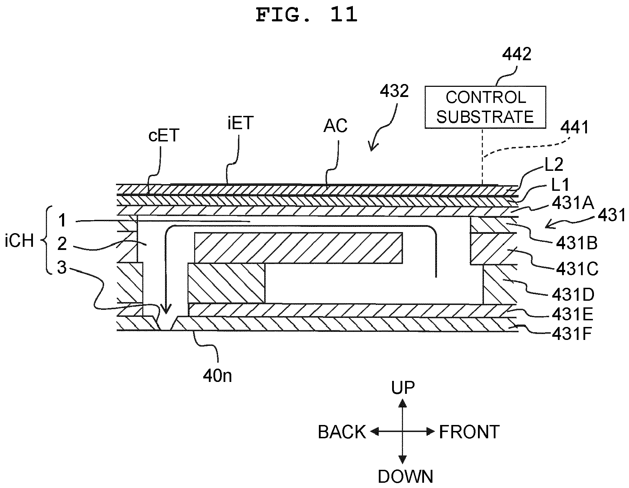

The head 43 is fixed to the lower surface of the main body unit 42. The head 43 is provided with a channel unit 431 and a piezoelectric actuator 432 (FIG. 10, FIG. 11).

As depicted in FIG. 11, the channel unit 431 is a stacked structure in which an ink sealing film 431A, plates 431B to 431E, and a nozzle plate 431F are stacked in this order as referred to from the top. As depicted in FIG. 10, channels CH are formed at the inside of the channel unit 431.

The channels CH include eight ink flow ports IP₄₃, four manifold channels M1, M2, M3, M4, and forty-eight individual channels iCH. Each of the four manifold channels M1 to M4 is a straight channel which is communicated with the ink flow port IP₄₃ at both end portions. Twelve individual channels iCH are connected to each of the four manifold channels M1 to M4.

As depicted in FIG. 11, each of the individual channels iCH includes a pressure chamber 1, a descender channel 2, and a nozzle 3. The upper surface of the pressure chamber 1 is formed by the ink sealing film 431A. The descender channel 2 extends in the up-down direction from the pressure chamber 1 to the nozzle 3. The nozzle 3 is a minute opening for discharging the ink toward the medium PM. The nozzle 3 is formed through the nozzle plate 431F. The lower surface of the nozzle plate 431F is the lower surface of the head mechanism 40, which is the nozzle surface 40n. Nozzle arrays L₃ (FIG. 10) are formed on the nozzle surface 40n in the direction in which the manifold channels M1 to M4 extend.

As depicted in FIG. 11, the piezoelectric actuator 432 is composed of a first piezoelectric layer L1 which is provided on the upper surface of the channel unit 431, a second piezoelectric layer L2 which is disposed over or above the first piezoelectric layer L1, a common electrode cET which is interposed by the first piezoelectric layer L1 and the second piezoelectric layer L2, and a plurality of individual electrodes iET which is provided on the upper surface of the second piezoelectric layer L2. The plurality of individual electrodes iET is provided on the upper surface of the second piezoelectric layer L2 so that the plurality of individual electrodes iET is positioned over or above the pressure chambers 1 of the plurality of individual channels iCH respectively. The portion of the second piezoelectric layer L2, which is interposed by the common electrode cET and each of the plurality of individual electrodes iET, serves as the active portion AC which is polarized in the thickness direction.

Each of the individual electrodes iET of the piezoelectric actuator 432 is connected to a control substrate 442 on which driver IC is mounted via FPC (Flexible Printed Circuits: flexible printed circuit board or substrate) 441. The control substrate 442 is arranged at the inside of the main body unit 42.

The wiring connecting portion WC has a substrate-shaped configuration. The upper end portion of the wiring connecting portion WC protrudes upwardly from the connecting plate 41. The wiring connecting portion WC is connected to a relay substrate 50 (described later on) via an undepicted flexible substrate. The lower end portion of the wiring connecting portion WC is connected to the control substrate 442.

Each of the head mechanisms 40 is fixed to the bottom portion 11b of the first casing 11 (FIG. 2). In this state, the nozzle surface 40n of each of the head mechanisms 40 is exposed downwardly with respect to the casing 10. Further, the nozzle array L₃ on the nozzle surface 40n extends in the widthwise direction of the head system 100. The ten head mechanisms 40 are arranged in a zigzag form (zigzag configuration) in the widthwise direction.

Each of the head mechanisms 40 and the subtank 20 are connected to one another by means of an ink tube set ITS (FIG. 2). The ink tube set ITS includes one ink supply tube IST and one ink discharge tube IDT.

The upper end of each of the ink supply tubes IST is connected to the ink supply port SP of each of the ink flow port sets S of the subtank 20. The lower end of each of the ink supply tubes IST is connected to the ink supply tube connecting portion ISC of the head mechanism 40. The upper end of each of the ink discharge tubes IDT is connected to the ink discharge port DP of each of the ink flow port sets S of the subtank 20. The lower end of each of the ink discharge tubes IDT is connected to the ink discharge tube connecting portion IDC of the head mechanism 40.

The ink, which is supplied from the subtank 20 via the ink supply tube IST to the ink supply tube connecting portion ISC, is branched at the main body unit 42, and the ink flows into the ink flow port IP₄₃ of the head 43.

The channels of the main body unit 42 are configured so that the ink, which is supplied to the ink supply tube connecting portion ISC, flows through the manifolds M1 to M4, and the ink, which is discharged (drained) from the manifolds M1 to M4, flows to the ink discharge tube connecting portion IDC. The channels may be configured so that the ink flows in an identical direction through all of the manifolds M1 to M4. Alternatively, the channels may be configured so that the direction, in which the ink flows through the manifolds M1, M3, is mutually opposite to the direction in which the ink flows through the manifolds M2, M4.

### <Relay substrate 50>

The relay substrate 50 principally performs the relay between the control substrate unit 60 (described later on) and the control substrate 442 of the head mechanism 40. The relay substrate 50 is connected to the wiring connecting portion WC of each of the ten head mechanisms 40 by means of an undepicted flexible substrate.

Further, the relay substrate 50 is connected to an electric connecter CN of the casing 10 by means of an undepicted wiring. The electric power, which is supplied from the electric connecter CN, is distributed, for example, to the control substrate unit 60.

As depicted in FIG. 2, the relay substrate 50 is attached to the lower surface of the second area 11a2 of the top plate 1 1a so that the relay substrate 50 is parallel to the second area 11a2. That is, the mounting surface of the relay substrate 50 is parallel to the upper and lower surfaces of the second area 11a2, and the mounting surface is parallel to the plane which includes the widthwise direction and the front-back direction.

### <Control substrate unit 60>

The control substrate unit 60 receives the printing data signal from the controller 700 of the printer 1000, and the control substrate unit 60 sends the signal to the control substrate 442 of each of the head mechanisms 40 via the relay substrate 50. The control substrate unit 60 is provided at the inside of the second casing 12 of the casing 10 (FIG. 2).

The terminal (not depicted) of the control substrate unit 60 protrudes downwardly via an opening (not depicted) provided on the bottom plate 12b of the second casing 12. The terminal is attached/detached with respect to a connector (not depicted) of the relay substrate 50 via an opening (not depicted) provided in the second area 11a2 of the top plate 11a of the first casing 11, and thus the second casing 12 is attached/detached with respect to the first casing 11.

### <HPM 500>

Each of the four HPMs 500 connects one of the four main tanks 410 of the ink tank 400 and one of the four head systems 100. The four HPMs 500 are configured identically with each other. Therefore, the following explanation will be made regarding one of the four.

As depicted in FIG. 12, HPM 500 principally includes a pump P, a degassing unit DU, five channels (channels CH1 to CH5), and five valves (valves V1 to V5).

The channel CH1 connects the main tank 410 and a suction port PA of the pump P. The channel CH2 connects a discharge port PB of the pump P and the fill tank FT via the ink flow port IP₁₀ disposed on the front side of the casing 10 and the ink flow port IP₂₀ disposed on the front side of the subtank 20. The channel CH3 connects a junction (branch) J1 of the channel CH2 and the drain tank DT via the ink flow port IP₁₀ disposed on the back side of the casing 10 and the ink flow port IP₂₀ disposed on the back side of the subtank 20. The channel CH4 connects a junction J2 of the channel CH1 and a junction J3 of the channel CH3. The channel CH5 connects a junction J4 of the channel CH2 and the main tank 410.

The valve V1 is provided at a position of the channel CH1 between the main tank 410 and the junction J2. The valve V2 is provided at a position of the channel CH2 between the junction J1 and the fill tank FT. The valve V3 is provided at a position of the channel CH3 between the junction J1 and the junction J3. The valve V4 is provided at the channel CH4. The valve V5 is provided at the channel CH5.

The degassing unit DU is provided at a position of the channel CH2 between the junction J1 and the junction J4. In this embodiment, the degassing unit DU is a known degassing module. The degassing unit DU removes the gas such as air or the like contained in the ink allowed to pass through the degassing unit DU.

### <Printing method>

An image is formed on the medium PM by means of the printer 1000 by allowing the controller 700 to control the respective components of the printer 1000 as follows.

The controller 700 controls HPM 500 and the air pressure adjuster 600, and thus the ink contained in the main tank 410 is fed or sent to the head system 100. In this section, an explanation will be made about the supply of the ink with respect to one head system 100. The ink supply is similarly or equivalently performed for each of the four head systems 100.

For example, the ink contained in the main tank 410 is sent to only the fill tank FT by driving the pump P in a state in which the first valve V1 and the second valve V2 of HPM 500 are opened and the third valve V3 to the fifth valve V5 are closed. In another example, the ink contained in the main tank 410 is sent to both of the fill tank FT and the drain tank DT by driving the pump P in a state in which the first valve V1 to third valve V3 of HPM 500 are opened and the fourth valve V4 and the fifth valve V5 are closed.

Note that when the ink is discharged from the drain tank DT, for example, the pump P is driven in a state in which the fourth valve V4 and the fifth valve V5 are opened and the first valve V1 to the third valve V3 are closed. Accordingly, the ink contained in the drain tank DT is returned to the main tank 410 via the junction J3, the channel CH4, the junction J2, the junction J4, and the channel CH5.

In this embodiment, the controller 700 constitutes the liquid surface detecting device SD together with the two liquid surface detecting units 30 of the head system 100. The controller 700 detects any one of the area RA (full area), the area RB (high area), the area RC (low area), and the area RD (empty area) in which the liquid surface of the ink contained in each of the fill tank FT and the drain tank DT exists. Therefore, the controller 700 controls the driving of the pump P of the HPM 500 on the basis of the detection result of the liquid surface detecting device SD to start or stop the ink supply and/or the ink discharge (drainage) with respect to the fill tank FT and/or the drain tank DT.

For example, the controller 700 stops the supply of the ink to the fill tank FT on the basis of such detection that the position of the liquid surface of the ink in the internal space IN_{FT} of the fill tank FT is disposed in the area RA (full area). In another situation, the controller 700 starts the supply of the ink to the fill tank FT on the basis of such detection that the position of the liquid surface of the ink in the internal space IN_{FT} of the fill tank FT is disposed in the area RD (empty area).

The air pressure adjuster 600 performs the adjustment so that the air pressure in the air layer (area in which the air exists on the upper side of the liquid surface of the ink) of the internal space IN_{FT} of the fill tank FT is higher than the air pressure of the air layer of the internal space IN_{DT} of the drain tank DT. Accordingly, the ink contained in the fill tank FT is sent to the head mechanism 40 via the ink supply port SP and the ink supply tube IST. The ink, which is not discharged (ejected) from the nozzle 3 in the head mechanism 40, is sent to the drain tank DT via the ink discharge tube IDT and the ink discharge port DP.

Concurrently with the ink supply as described above, the controller 700 sends, to the control substrate unit 60, the printing data corresponding to the image to be formed. The control substrate unit 60 sends the printing data to the control substrate 442 of each of the head mechanisms 40 via the relay substrate 50 and the flexible substrate (not depicted). The control substrate 442 of each of the head mechanisms 40 drives the plurality of piezoelectric actuators 432 at appropriate timings on the basis of the printing data respectively, and the ink is discharged from the nozzles 3 at appropriate timings.

The controller 700 alternately performs the ink discharging and the conveyance of the medium PM in the conveying direction by using the pair of conveying rollers 301, 302. Thus, the image corresponding to the printing data is formed on the medium PM.

Effects of the liquid surface detecting device and the liquid surface detecting method of this embodiment are summarized below.

The liquid surface detecting device SD of this embodiment detects in which area of the area RA to the area RD the liquid surface position of the ink exists, on the basis of the presence or absence of the temporal variation (time-dependent variation) of the electrostatic capacity value EC_{T} outputted by the top detecting electrode TE, the electrostatic capacity value EC_{M} outputted by the middle detecting electrode ME, and the electrostatic capacity value EC_{B} outputted by the bottom detecting electrode BE. In this way, the liquid surface position is detected on the basis of the presence or absence of the temporal variation of the electrostatic capacity value EC_{T}, EC_{M}, EC_{B} rather than the absolute value of the electrostatic capacity value EC_{T}, EC_{M}, EC_{B}. Therefore, any person, who produces the liquid surface detecting device SD, can produce the liquid surface detecting device SD at a high production efficiency, while the initial setting is performed with little time and labor, or neither time nor labor is required for the initial setting. Further, any person, who carries out the liquid surface detecting method of this embodiment, can carry out the liquid surface detecting method of this embodiment with ease, while the initial setting is performed with little time and labor, or neither time nor labor is required for the initial setting.

In the liquid surface detecting device SD of this embodiment, both of the middle detecting electrode ME and the bottom detecting electrode BE are arranged in the certain area in the up-down direction (specifically, in the area RC). Then, if both of the electrostatic capacity value EC_{M} outputted by the middle detecting electrode ME and the electrostatic capacity value EC_{B} outputted by the bottom detecting electrode BE temporally change, it is determined that the liquid surface position of the ink is disposed in the concerning area (i.e., in the area RC). In this way, the plurality of detecting electrodes is arranged in the certain area in the up-down direction. Thus, the internal space IN_{FT}, IN_{DT} is segmented into the areas of the number which is larger than the number of the detecting electrodes. It is possible to detect the liquid surface position in more detail.

Further, the number of the detecting electrodes capable of being possessed by the liquid surface detecting unit 30 is restricted by the number of the connecting channels of the detection circuit 312 to which the detecting electrodes are connected. On this account, the successful segmentation of the internal space IN_{FT}, IN_{DT} into the areas of the number larger than the number of the detecting electrodes results in the successful segmentation of the internal space IN_{FT}, IN_{DT} into the areas of the number larger than the number of the connecting channels of the detection circuit 312.

In the liquid surface detecting device SD of this embodiment, the top detecting electrode TE, the middle detecting electrode ME, and the bottom detecting electrode BE are integrally formed on the base substrate 311 in the main body unit (main body) 31 of the liquid surface detecting unit 30. Therefore, the top detecting electrode TE, the middle detecting electrode ME, and the bottom detecting electrode BE can be arranged at the appropriate positions with respect to the fill tank FT and the drain tank DT by merely allowing the base substrate 311 to abut against the subtank 20.

In the liquid surface detecting device SD of this embodiment, the detection, which relates to the area having the high possibility to cause any malfunction if any detection failure occurs, i.e., the area RA (full area) disposed most closely to the air flow port AP₂₀ and the area RD (empty area) disposed most closely to the ink flow port set S, is performed on the basis of the change in the electrostatic capacity value outputted by the single detecting electrode. When the detection is performed on the basis of the output of the single detecting electrode as described above, it is thereby possible to decrease the numbers of the wirings and the connecting channels relevant to the detection as compared with a case in which the detection is performed on the basis of the outputs of a plurality of detecting electrodes. It is possible to decrease the fear for the occurrence of the detection failure caused by any trouble thereof.

Note that the malfunction, which may be caused by the detection failure, is specifically as follows. That is, if the detection failure is caused in the area RA (full area), then the ink enters the air pressure adjuster 600 via the air flow port AP₂₀, and it is feared that any appropriate pressure adjustment cannot be performed on account of the entered ink which behaves as the resistance. Further, if the detection failure is caused in the area RD (empty area), then the air enters the head mechanism 40, and it is feared that any abnormal discharging such as the discharging failure or the like may occur due to the bubble contained in the ink brought about by the entered air.

In the main body unit 31 of the liquid surface detecting device SD of this embodiment, the detection circuit 312 is arranged over or above the middle detecting electrode ME, and the middle detecting electrode ME is arranged on the side opposite to the detection circuit 312 of the top detecting electrode TE in the left-right direction. Therefore, the bottom detecting electrode BE can be arranged under or below the top detecting electrode TE. It is possible to prevent the bottom wiring BW from being excessively long.

As for the top wiring TW, the middle wiring MW, and the bottom wiring BW, the noise, which is caused by the change in the surrounding electric field, easily occurs when the wiring is longer. Further, if the wirings are longer, then the electricity, which flows through each of the wirings, becomes dull, and any error arises in the detection of each of the electrostatic capacity values based on the use of each of the wirings. That is, when the top wiring TW, the middle wiring MW, and the bottom wiring BW are longer, the detection accuracy of the liquid surface detecting device SD is more lowered. On the contrary, in this embodiment, the bottom wiring BW does not become excessively long, and the detection accuracy is high. If the top detecting electrode TE and the bottom detecting electrode BE are arranged on the side opposite to the detection circuit 312 of the middle detecting electrode ME in the left-right direction, then the bottom wiring BW becomes long, and the top wiring TW becomes long as well.

In the liquid surface detecting device SD of this embodiment, the pseudo-capacitors are formed by the top detecting electrode TE, the middle detecting electrode ME, and the bottom detecting electrode BE and the grounded metal surfaces (i.e., the GND layer 312G of the detection circuit 312 and the fixing plate 32) which are arranged in the vicinity thereof for another purpose. Therefore, it is possible to omit the time and labor as well as the space for separately providing the dedicated ground electrode, while maintaining the detection accuracy.

In the liquid surface detecting device SD of this embodiment, the top guard electrode TGE, the middle guard electrode MGE, the bottom guard electrode BGE, and the first guard electrode GE1 to the fifth guard electrode GE5 are arranged around the top detecting electrode TE, the middle detecting electrode ME, and the bottom detecting electrode BE. Therefore, the surrounding electric field is shielded (subjected to the shielding) by the guard electrodes. The influence, which is exerted by the surrounding electric field on the electrostatic capacity values EC_{T}, EC_{M}, EC_{B} outputted by the top detecting electrode TE, the middle detecting electrode ME, and the bottom detecting electrode BE, is suppressed. Thus, it is possible to detect the position of the liquid surface at the high accuracy.

### [Modifications]

The following modifications can be also used for the liquid surface detecting device SD and the liquid surface detecting method of the embodiment described above.

In the embodiment described above, the liquid surface detecting device SD detects the position of the liquid surface of the ink on the basis of the displacement of the liquid surface of the ink. On this account, it is difficult to detect the position of the liquid surface during the period in which the liquid surface of the ink is not displaced.

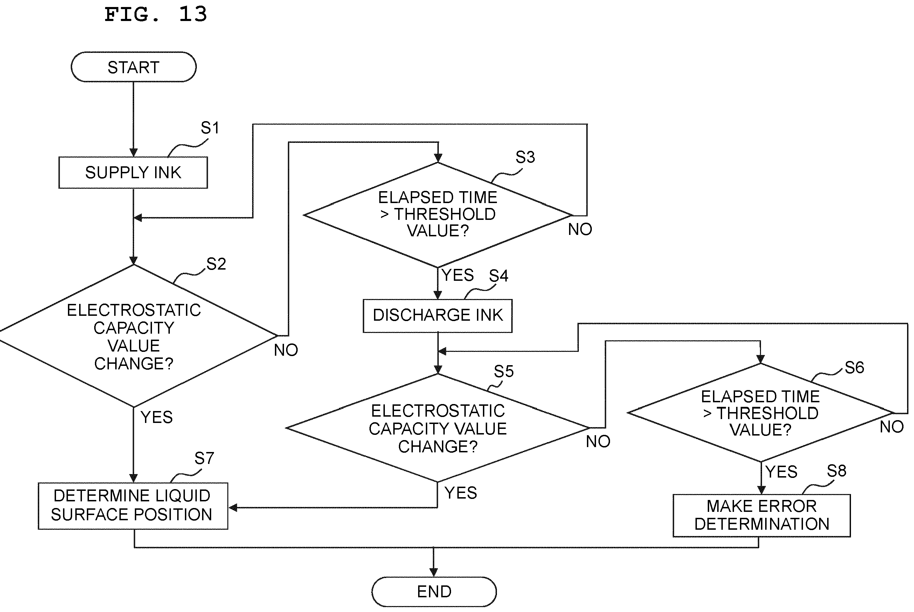

Therefore, for example, after the period such as the printing idle period, in which the liquid surface of the ink does not change, continues, the position of the liquid surface of the ink may be detected by executing a liquid surface detection process depicted in a flow chart of FIG. 13 by means of the controller 700.

Note that in the following description, an explanation will be made about a case in which the position of the liquid surface of the ink is detected in the internal space IN_{FT} of the fill tank FT. The liquid surface position of the ink can be also detected in accordance with the same or equivalent steps in the internal space IN_{DT} of the drain tank DT. The detection of the liquid surface position of the ink in the internal space IN_{FT} of the fill tank FT and the detection of the liquid surface position of the ink in the internal space IN_{DT} of the drain tank DT may be performed concurrently.

At first, the controller 700 supplies the ink to the fill tank FT by the aid of HPM 500 (Step S1). Then, the controller 700 determines whether or not the temporal variation occurs in any one of the electrostatic capacity values EC_{T}, EC_{M}, EC_{B} by the aid of the liquid surface detecting device SD, while supplying the ink to the fill tank FT by the aid of HPM 500 (Step S2). If the liquid surface of the ink is positioned in any one of the area RA to the area RD, the temporal variation occurs in at least one of the electrostatic capacity values EC_{T}, EC_{M}, EC_{B} (Step S2: YES). In this case, the liquid surface detecting device SD determines the position of the liquid surface of the ink in the internal space IN_{FT} on the basis of information about which one or more of the electrostatic capacity values EC_{T}, EC_{M}, EC_{B} is the electric capacity values in which the temporal variation occurs (Step S7).

If all of the electrostatic capacity values EC_{T}, EC_{M}, EC_{B} do not temporally change (Step S2: NO), the controller 700 determines whether or not the elapsed time from the start of the ink supply exceeds a predetermined threshold value (Step S3). The predetermined threshold value may be set as a value at which the liquid surface does not arrive at the air channel AP₂₀ formed through the top plate 22 via the ink supply, even if the liquid surface is disposed at the upper end of the area RA upon the start of the liquid surface detection process.

If the elapsed time does not exceed the predetermined threshold value (Step S3: NO), the controller 700 returns the step to Step S2. If the elapsed time exceeds the predetermined threshold value (Step S3: YES), then the controller 700 terminates the ink supply to the fill tank FT by the aid of HPM 500, and starts the discharge (drainage) of the ink from the fill tank FT (Step S4). The controller 700 performs the discharge of the ink, for example, by sending the ink contained in the fill tank FT to the drain tank DT via the head mechanism 40.

After that, the controller 700 determines whether or not the temporal variation occurs in any one of the electrostatic capacity values EC_{T}, EC_{M}, EC_{B} by the aid of the liquid surface detecting device SD, while performing the ink discharge (drainage) from the fill tank FT (Step S5). If the temporal variation occurs in at least one of the electrostatic capacity values EC_{T}, EC_{M}, EC_{B} (Step S5: YES), the liquid surface detecting device SD determines the position of the liquid surface of the ink in the internal space IN_{FT} on the basis of information about which one or more of the electrostatic capacity values EC_{T}, EC_{M}, EC_{B} is the electrostatic capacity value in which the temporal variation occurs (Step S7).

If all of the electrostatic capacity values EC_{T}, EC_{M}, EC_{B} do not temporally change (Step S5: NO), the controller 700 determines whether or not the elapsed time after the start of the ink discharge (drainage) exceeds a predetermined threshold value (Step S6). For example, the predetermined threshold value may be a value larger than the threshold value used in Step S3 (i.e., the threshold value in relation to the elapsed time after the start of the ink supply). If the elapsed time does not exceed the predetermined threshold value (Step S6: NO), the controller 700 returns the step to Step S5. If the elapsed time exceeds the predetermined threshold value (Step S6: YES), the controller 700 makes the error determination (Step S8).

In this way, at first, the position of the liquid surface of the ink is detected, while performing the ink supply. Accordingly, even when the liquid surface of the ink is positioned in the area RD (empty area), it is possible to avoid such a situation that the internal space IN_{FT} becomes empty and the head mechanism 40 is contaminated with the air via the ink supply port SP. Further, the duration time of the ink supply is restricted to be not more than the predetermined threshold value. Accordingly, even when the liquid surface of the ink is positioned over or above the area RA (full area), it is possible to suppress such a situation that the internal space IN_{FT} is filled with the ink and the air flow port AP₂₀ is contaminated with the ink.

Note that it is estimated in some cases that the amount of the ink is not more than a predetermined amount (or zero) in the internal space IN_{FT}, IN_{DT}, for example, when the printer 1000 is initially installed and/or when the head system 100 is exchanged with a new head system 100. In such a case, the controller 700 sets up a time extension flag to change the threshold value used in Step S3 from a first threshold value which is to be ordinarily used to a second threshold value which is longer than the first threshold value.

Accordingly, even when the amount of the ink is small in the internal space IN_{FT}, IN_{DT}, and a certain period of time is required until the liquid surface of the ink arrives at the area RD (empty area) after the start of the ink supply, it is possible to satisfactorily detect the position of the liquid surface of the ink, while suppressing the occurrence of the error determination.

In the liquid surface detecting device SD of the embodiment described above, the pseudo-capacitor is constructed by each of the top detecting electrode TE, the middle detecting electrode ME, and the bottom detecting electrode BE, and the GND layer 312G of the detection circuit 312 and the fixing plate 32 each of which is the ground surface made of metal arranged in the vicinity thereof. However, there is no limitation thereto.

A pseudo-capacitor may be constructed by using only one of the GND layer 312G of the detection circuit 312 and the fixing plate 32 as the ground electrode. Alternatively, a pseudo-capacitor may be constructed by using, as the ground electrode, the entire subtank 20 (specifically, the grounded metal portion including, for example, the top plate 22 and the bottom plate 23 of the entire subtank 20), in place of or in addition to the GND layer 312G and the fixing plate 32.

In the liquid surface detecting device SD of the embodiment described above, the electrostatic capacity values EC_{T}, EC_{M}, EC_{B}, which are outputted by the top detecting electrode TE, the middle detecting electrode ME, and the bottom detecting electrode BE, are sent to the controller 700 by the aid of the detection circuit 312. However, there is no limitation thereto. The detection circuit 312 may be omitted, and the top detecting electrode TE, the middle detecting electrode ME, and the bottom detecting electrode BE may be electrically connected to the controller 700 directly.

In the embodiment described above, the liquid surface detecting device SD is constructed by the two liquid surface detecting units 30 which are attached to the subtank 20 and the controller 700 which is arranged on the casing 900. However, there is no limitation thereto.

For example, one liquid surface detecting unit 30 may be used. Further, a distinct controller, which brings about the same function as the function of the controller 700 concerning the surface detection, may be mounted on the base substrate 311 of the main body unit 31. The controller and the detection circuit 312 may be configured as an integrated control circuit.

The liquid surface detecting device SD of the embodiment described above has the three detecting electrodes, i.e., the top detecting electrode TE, the middle detecting electrode ME, and the base detecting electrode BE. However, there is no limitation thereto. The number of the detecting electrodes possessed by the liquid surface detecting device SD may be any arbitrary plural number.

In the embodiment described above, the liquid surface detecting device SD is configured to detect which one of the four areas obtained by segmenting the internal space IN_{FT} is the area in which the liquid surface of the ink accommodated in the internal space IN_{FT} of the fill tank FT is positioned, as well as which one of the four areas obtained by segmenting the internal space IN_{DT} is the area in which the liquid surface of the ink accommodated in the internal space IN_{DT} of the drain tank DT is positioned. However, there is no limitation thereto. It is possible to provide configuration which is adapted to such a form that each of the internal spaces IN_{FT}, IN_{DT} is segmented into any arbitrary plural number of areas by changing the size (dimension) and the arrangement of each of the top detecting electrode TE, the middle detecting electrode ME, and the bottom detecting electrode BE.

For example, in the case of configuration adapted to such a form that the internal space IN_{FT}, IN_{DT} is segmented into two areas, the bottom detecting electrode BE may be omitted. In the case of configuration adapted to such a form that the internal space IN_{FT}, IN_{DT} is comparted into three areas, the top detecting electrode TE may be omitted. Alternatively, the size or dimension in the up-down direction of the bottom detecting electrode BE may be decreased, and the position of the upper end BEa of the bottom detecting electrode BE in the up-down direction may be the same as the position of the lower end MEb of the middle detecting electrode ME in the up-down direction.

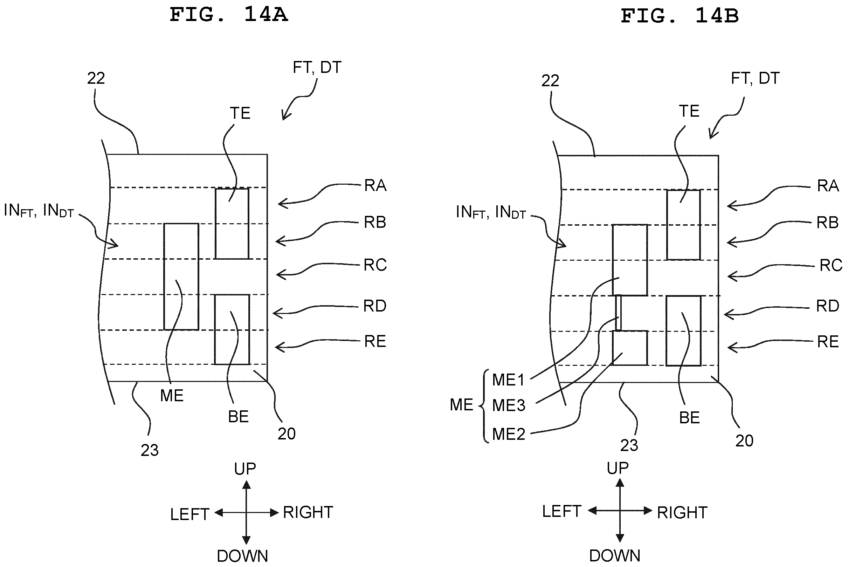

In the case of configuration adapted to such a form that the internal space IN_{FT}, IN_{DT} is comparted into five areas (area RA to area RE as referred to from the top), for example, as depicted in FIG. 14A, the respective detecting electrodes are arranged as follows. That is, the top detecting electrode TE extends between the upper end of the area RA and the lower end of the area RB, the middle detecting electrode ME extends between the upper end of the area RB and the lower end of the area RD, and the bottom detecting electrode BE extends between the upper end of the area RD and the lower end of the area RE.

In this configuration, if only the electrostatic capacity value EC_{T} temporally changes, it is determined that the liquid surface exists in the area RA. If the electrostatic capacity value EC_{T} and the electrostatic capacity value EC_{M} temporally change, it is determined that the liquid surface exists in the area RB. If only the electrostatic capacity value EC_{M} temporally changes, it is determined that the liquid surface exists in the area RC. If the electrostatic capacity value EC_{M} and the electrostatic capacity value EC_{B} temporally change, it is determined that the liquid surface exists in the area RD. If only the electrostatic capacity value EC_{B} temporally changes, it is determined that the liquid surface exists in the area RE.

Alternatively, as depicted in FIG. 14B, the respective detecting electrodes are arranged as follows. That is, the top detecting electrode TE extends between the upper end of the area RA and the lower end of the area RB, the middle detecting electrode ME extends between the upper end of the area RB and the lower end of the area RC and between the upper end of the area RE and the lower end of the area RE, and the bottom detecting electrode BE extends between the upper end of the area RD and the lower end of the area RE. The middle detecting electrode ME is configured such that an upper middle detecting electrode ME1 and a lower middle detecting electrode ME2 are connected to one another by means of a connecting wiring ME3 which is formed in the inner layer IS of the base substrate 311. Note that it is also allowable to form the connecting wiring ME3 on the solder surface SS. However, when the connecting wiring ME3 is formed in the inner layer IS, it is thereby possible to more appropriately suppress the influence on the electrostatic capacity value EC_{M} outputted from the middle detecting electrode ME2 when the liquid surface of the ink is displaced in the area RD. The area, in which the connecting wiring ME3 is arranged, is not included in the area in which the middle detecting electrode ME is arranged.

In this configuration, if only the electrostatic capacity value EC_{T} temporally changes, it is determined that the liquid surface exists in the area RA. If the electrostatic capacity value EC_{T} and the electrostatic capacity value EC_{M} temporally change, it is determined that the liquid surface exists in the area RB. If only the electrostatic capacity value EC_{M} temporally changes, it is determined that the liquid surface exists in the area RC. If only the electrostatic capacity value EC_{B} temporally changes, it is determined that the liquid surface exists in the area RD. If the electrostatic capacity value EC_{M} and the electrostatic capacity value EC_{B} temporally change, it is determined that the liquid surface exists in the area RE.

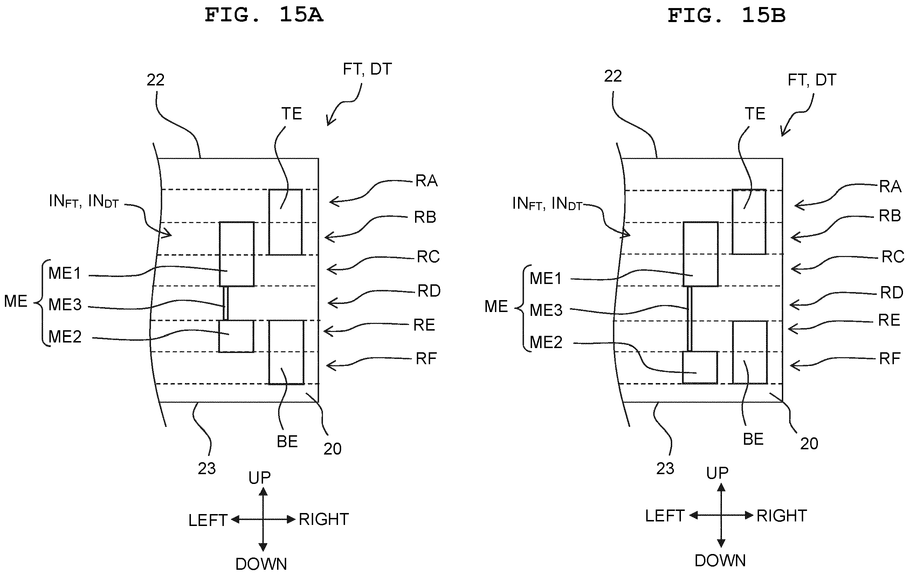

In the case of configuration adapted to such a form that the internal space IN_{FT}, IN_{DT} is segmented into six areas (area RA to area RF as referred to from the top), for example, as depicted in FIG. 15A, the respective detecting electrodes are arranged as follows. That is, the top detecting electrode TE extends between the upper end of the area RA and the lower end of the area RB, the middle detecting electrode ME extends between the upper end of the area RB and the lower end of the area RC and between the upper end of the area RE and the lower end of the area RE, and the bottom detecting electrode BE extends between the upper end of the area RE and the lower end of the area RF. The middle detecting electrode ME is configured such that an upper middle detecting electrode ME1 and a lower middle detecting electrode ME2 are connected to one another by means of a connecting wiring ME3 which is formed in the inner layer IS of the base substrate 311.

In this configuration, if only the electrostatic capacity value EC_{T} temporally changes, it is determined that the liquid surface exists in the area RA. If the electrostatic capacity value EC_{T} and the electrostatic capacity value EC_{M} temporally change, it is determined that the liquid surface exists in the area RB. If only the electrostatic capacity value EC_{M} temporally changes, it is determined that the liquid surface exists in the area RC. If all of the electrostatic capacity values EC_{T}, EC_{M}, EC_{B} do not temporally change, it is determined that the liquid surface exits in the area RD. If the electrostatic capacity value EC_{M} and the electrostatic capacity value EC_{B} temporally change, it is determined that the liquid surface exists in the area RE. If only the electrostatic capacity value EC_{B} temporally changes, it is determined that the liquid surface exists in the area RF.

Alternatively, as depicted in FIG. 15B, the respective detecting electrodes are arranged as follows. That is, the top detecting electrode TE extends between the upper end of the area RA and the lower end of the area RB, the middle detecting electrode ME extends between the upper end of the area RB and the lower end of the area RC and between the upper end of the area RF and the lower end of the area RF, and the bottom detecting electrode BE extends between the upper end of the area RE and the lower end of the area RF.

In this configuration, if only the electrostatic capacity value EC_{T} temporally changes, it is determined that the liquid surface exists in the area RA. If the electrostatic capacity value EC_{T} and the electrostatic capacity value EC_{M} temporally change, it is determined that the liquid surface exists in the area RB. If only the electrostatic capacity value EC_{M} temporally changes, it is determined that the liquid surface exists in the area RC. If all of the electrostatic capacity values EC_{T}, EC_{M}, EC_{B} do not temporally change, it is determined that the liquid surface exits in the area RD. If only the electrostatic capacity value EC_{B} temporally changes, it is determined that the liquid surface exists in the area RE. If the electrostatic capacity value EC_{M} and the electrostatic capacity value EC_{B} temporally change, it is determined that the liquid surface exists in the area RF.

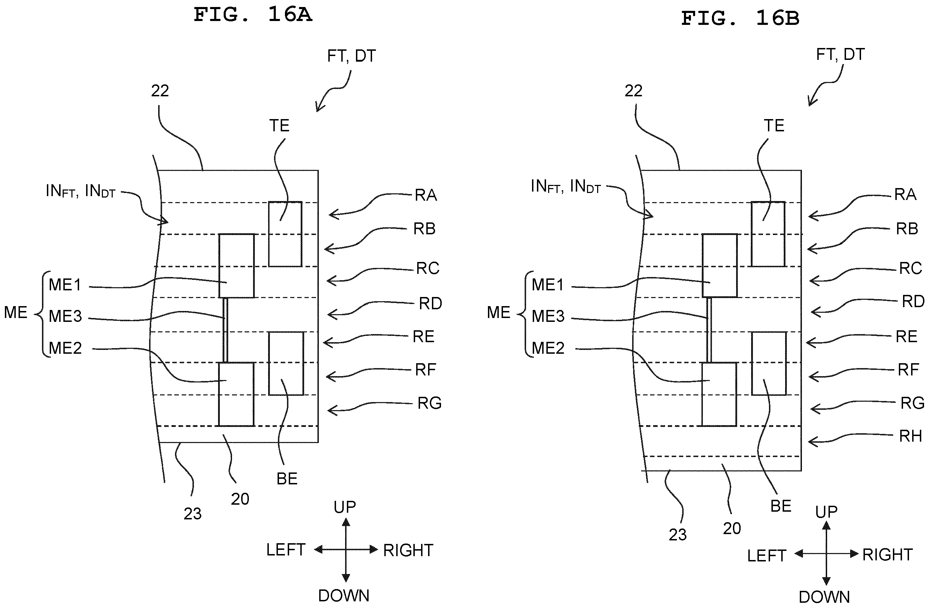

In the case of configuration adapted to such a form that the internal space IN_{FT}, IN_{DT} is segmented into seven areas (area RA to area RG as referred to from the top), for example, as depicted in FIG. 16A, the respective detecting electrodes are arranged as follows. That is, the top detecting electrode TE extends between the upper end of the area RA and the lower end of the area RB, the middle detecting electrode ME extends between the upper end of the area RB and the lower end of the area RC and between the upper end of the area RF and the lower end of the area RG, and the bottom detecting electrode BE extends between the upper end of the area RE and the lower end of the area RF. The middle detecting electrode ME is configured such that an upper middle detecting electrode ME1 and a lower middle detecting electrode ME2 are connected to one another by means of a connecting wiring ME3 which is formed in the inner layer IS of the base substrate 311.

In this configuration, if only the electrostatic capacity value EC_{T} temporally changes, it is determined that the liquid surface exists in the area RA. If the electrostatic capacity value EC_{T} and the electrostatic capacity value EC_{M} temporally change, it is determined that the liquid surface exists in the area RB. If only the electrostatic capacity value EC_{M} temporally changes, it is determined that the liquid surface exists in the area RC or the area RG. Then, if the electrostatic capacity value EC_{B} obtained from the bottom detecting electrode BE at the point in time of the determination is not less than a predetermined threshold value, it is determined that the liquid surface exists in the area RC. If the electrostatic capacity value EC_{B} is smaller than the predetermined threshold value, it is determined that the liquid surface exists in the area RG. If the liquid surface exists in the area RC, then the ink exists at the height at which the bottom detecting electrode BE is positioned, and the electrostatic capacity value EC_{B} is increased. Therefore, it is possible to distinguish whether the liquid surface exists in the area RC or in the area RG by making reference to the magnitude of the absolute value of the electrostatic capacity value EC_{B}.

If all of the electrostatic capacity values EC_{T}, EC_{M}, EC_{B} do not temporally change, it is determined that the liquid surface exits in the area RD. If only the electrostatic capacity value EC_{B} temporally changes, it is determined that the liquid surface exists in the area RE. If the electrostatic capacity value EC_{M} and the electrostatic capacity value EC_{B} temporally change, it is determined that the liquid surface exists in the area RF.

As for a form in which the internal space IN_{FT}, IN_{DT} is comparted into eight areas (area RA to area RH as referred to from the top), for example, in relation to the configuration adapted to the form in which the internal space IN_{FT}, IN_{DT} is segmented into the seven areas (FIG. 16A), it is perceived that an area RH, in which any detecting electrode is not arranged, is segmented under the area RG, and the following liquid surface position determination is made (FIG. 16B).

That is, if all of the electrostatic capacity values EC_{T}, EC_{M}, EC_{B} do not temporally change, it is determined that the liquid surface exits in the area RD or the area RH. Then, if the electrostatic capacity value EC_{B} obtained from the bottom detecting electrode BE at the point in time of the determination is not less than a predetermined threshold value, it is determined that the liquid surface exists in the area RD. If the electrostatic capacity value EC_{B} is smaller than the predetermined threshold value, it is determined that the liquid surface exists in the area RH.

The liquid surface detecting device SD of the embodiment described above is configured such that the top detecting electrode TE, the middle detecting electrode ME, and the bottom detecting electrode BE are integrally formed on the base substrate 311 of the main body unit 31. However, there is no limitation thereto. For example, the base substrate 311 may be omitted. The top detecting electrode TE, the middle detecting electrode ME, and the bottom detecting electrode BE may be individually attached to the outer wall surface of the subtank 20 as the electrodes which are physically separated from each other.

In the liquid surface detecting device SD of the embodiment described above, the combination of the top detecting electrode TE, the middle detecting electrode ME, and the bottom detecting electrode BE, which is provided in order to detect the liquid surface position in a certain internal space (for example, the internal space IN_{FT} or the internal space IN_{DT}), is attached to the single wall surface for forming the internal space. However, there is no limitation thereto. At least one of the top detecting electrode TE, the middle detecting electrode ME, and the bottom detecting electrode BE may be attached to any wall surface which is different from the wall surface to which the other two of them are to be attached.

Specifically, for example, the top detecting electrode TE and the bottom detecting electrode BE may be attached to the right wall 21f of the subtank 20, and the middle detecting electrode ME may be attached to the front wall 21c of the subtank 20. In this case, the top detecting electrode TE and the bottom detecting electrode BE may be provided on a wiring substrate which is different from a wiring substrate for the middle detecting electrode ME. Alternatively, the top detecting electrode TE and the bottom detecting electrode BE as well as the middle detecting electrode ME may be provided on a single bent wiring substrate.

Alternatively, in a form in which the subtank 20 does not have the separation wall 21w and only the fill tank FT or the drain tank DT is formed at the inside, at least one of the top detecting electrode TE, the middle detecting electrode ME, and the bottom detecting electrode BE may be attached to the front wall 21c, and the other two may be attached to the back wall 21d.

In the liquid surface detecting device SD of the embodiment described above, the top detecting electrode TE, the middle detecting electrode ME, and the bottom detecting electrode BE are the plate-shaped (surface-shaped) electrodes which are arranged on the outer sides of the fill tank FT and the drain tank DT. However, there is no limitation thereto. At least one of the top detecting electrode TE, the middle detecting electrode ME, and the bottom detecting electrode BE may be arranged in the internal space IN_{FT} of the fill tank FT or the internal space IN_{DT} of the drain tank DT so that the electrode is immersed in the ink. Further, at least one of the top detecting electrode TE, the middle detecting electrode ME, and the bottom detecting electrode BE may be a rod-shaped electrode.

In the liquid surface detecting device SD of the embodiment described above, the top guard electrode TGE, the middle guard electrode MGE, and the bottom guard electrode BGE are formed so that the top guard electrode TGE, the middle guard electrode MGE, and the bottom guard electrode BGE extend in the same areas in the up-down direction as the top detecting electrode TE, the middle detecting electrode ME, and the bottom detecting electrode BE on the sides of the top detecting electrode TE, the middle detecting electrode ME, and the bottom detecting electrode BE in the left-right direction, respectively. The first guard electrode GE1 is formed so that the first guard electrode GE1 extends in the same area in the up-down direction as the top detecting electrode TE and the bottom detecting electrode BE on the sides of the top detecting electrode TE and the bottom detecting electrode BE in the plate thickness direction of the base substrate 311. The third guard electrode GE3 is formed so that the third guard electrode GE3 extends in the same area in the up-down direction as the middle detecting electrode ME on the side of the middle detecting electrode ME in the plate thickness direction of the base substrate 311. However, there is no limitation thereto. The respective guard electrodes may be arranged at arbitrary positions including positions separated from the base substrate 311.

At least one of the top guard electrode TGE, the middle guard electrode MGE, the bottom guard electrode BGE, and the first guard electrode GE1 to the fifth guard electrode GE5 may be omitted.

In the head system 100 of the embodiment described above, the subtank 20 is the lengthy and integrated tank which extends in the widthwise direction. However, there is no limitation thereto. The subtank 20 may have such a form that the subtank 20 includes a base portion (base) and at least one extended portion (extension) which is detachably attached to the base portion, and the volumes of the internal spaces IN_{FT}, IN_{DT} can be changed depending on the number of the extended portions. In this case, each of the base portion and the extended portion has a shape as obtained by decreasing the subtank 20 depicted in FIG. 4 in the widthwise direction. For example, a fluid connector may be used for the connection between the base portion and the extended portion and the connection between the extended portions.

In this form, the liquid surface detecting unit 30 may be provided for the base portion which is the necessary structure irrelevant to the number of the extended portions. Accordingly, the time and labor are omitted to replace the liquid surface detecting unit 30 depending on the number of the extended portions and/or the presence or absence of the extended portions. The extensibility is improved.

In the liquid surface detecting device SD of the embodiment described above, the shape of the fixing plate 32 and the method for attaching the fixing plate 32 to the subtank 20 may be appropriately changed. For example, the lower attachment portion 323 may be omitted. In this case, when the fixing plate 32 is attached to the subtank 20, the protrusion, which protrudes downwardly from the lower end portion of the pressing plate 321, may be fitted into a recess provided on a protruding portion (not depicted, for example, a ridge-shaped protruding portion extending in the horizontal direction) disposed on the side surface of the subtank 20.

The embodiment and the modifications have been explained above, as exemplified by the case in which the image is formed on the medium PM by discharging the inks from the head systems 100. The head system 100 may be a liquid discharging system for discharging any arbitrary liquid for image formation. The medium PM, on which the image is formed, may be, for example, printing paper, cloth, resin and the like.

Further, the liquid surface detecting device SD of each of the embodiment and the modifications described above can be used for the fill tank FT and the drain tank DT as well as any arbitrary container for accommodating any liquid.

It is to be understood that the embodiments described in this specification are depicted by way of example in relation to all points, and the embodiments are not restrictive. For example, the number and the configuration of the head systems 100 may be changed in the printer 1000. The number of colors capable of being simultaneously used for the printing by the printer 1000 is not limited as well. It is also appropriate to provide such configuration that only the single color printing can be performed. Further, for example, the number and the arrangement of the individual channels iCH can be also appropriately changed. Further, the technical features described in each of the embodiments and the modifications can be combined with each other.

The present invention is not limited to the embodiments described above provided that the features of the present invention are maintained. Other modes or embodiments, which are conceived within a scope of the technical concept of the present invention, are also included in the scope of the present invention.

### Reference Signs List:

10: casing
20: subtank
30: liquid surface detecting unit
31: main body unit
311: base substrate
312: detection circuit
32: fixing plate
33: buffer member
40: head mechanism
50: relay substrate
60: control substrate unit
100: head system
1000: printer
BE: base detecting electrode
BGE: base guard electrode
DT: drain tank
FT: fill tank
ME: middle detecting electrode
MGE: middle guard electrode
SD: liquid surface detecting device
TE: top detecting electrode
TGE: top guard electrode

## Claims

1. A liquid surface detecting device for detecting a surface of a liquid retained in an internal space of a container, the liquid surface detecting device comprising:
a plurality of detecting electrodes each positioned in an external space of the container or in the internal space of the container; **and**
a controller connected to each of the plurality of detecting electrodes, wherein:
the internal space includes a first area and a second area defined below the first area;
the plurality of detecting electrodes includes:
a first detecting electrode extending at least between an upper end of the first area and a lower end of the first area, the first detecting electrode being configured to output a first electrostatic capacity value depending on a position of the surface of the liquid; **and**
a second detecting electrode extending at least between an upper end of the second area and a lower end of the second area, the second detecting electrode being configured to output a second electrostatic capacity value depending on the position of the surface of the liquid; **and**
the controller is configured to determine presence or absence of a temporal variation of the first electrostatic capacity value and presence or absence of a temporal variation of the second electrostatic capacity value.

2. The liquid surface detecting device according to claim 1, wherein:
the internal space further includes a third area defined below the second area;
each of two of the plurality of detecting electrodes extends between an upper end and a lower end of any one of the first area, the second area, and the third area; **and**
any one of the plurality of detecting electrodes extends between the upper end and the lower end of each of remaining two of the first area, the second area, and the third area.

3. The liquid surface detecting device according to claim 2, wherein:
the internal space further includes a fourth area defined above the first area or below the third area;
the plurality of detecting electrodes further includes a third detecting electrode;
the third detecting electrode extends at least between an upper end of the fourth area and a lower end of the fourth area, the third detecting electrode being configured to output a third electrostatic capacity value depending on the position of the surface of the liquid; **and**
the controller is further configured to determine presence or absence of a temporal variation of the third electrostatic capacity value,
preferably wherein:
the fourth area is defined below the third area;
the first detecting electrode extends between the upper end of the first area and the lower end of the first area;
the second detecting electrode extends between the upper end of the second area and the lower end of the third area; **and**
the third detecting electrode extends between the upper end of the third area and the lower end of the fourth area.

4. The liquid surface detecting device according to claim 2, wherein:
the internal space further includes a fourth area defined below the third area and a fifth area defined below the fourth area;
the plurality of detecting electrodes further includes a third detecting electrode;
the first detecting electrode extends between the upper end of the first area and the lower end of the second area;
the second detecting electrode extends between the upper end of the second area and the lower end of the third area, and between an upper end of the fourth area and a lower end of the fourth area or between an upper end of the fifth area and a lower end of the fifth area;
the third detecting electrode extends between the upper end of the fourth area and the lower end of the fifth area, the third detecting electrode being configured to output a third electrostatic capacity value depending on the position of the surface of the liquid; **and**
the controller is further configured to determine presence or absence of a temporal variation of the third electrostatic capacity value.

5. The liquid surface detecting device according to claim 2, wherein:
the internal space further includes a fourth area defined below the third area, a fifth area defined below the fourth area, a sixth area defined below the fifth area, and a seventh area defined below **the sixth area;**
the plurality of detecting electrodes further includes a third detecting electrode;
the first detecting electrode extends between the upper end of the first area and the lower end of the second area;
the second detecting electrode extends between the upper end of the second area and the lower end of the third area and between an upper end of the sixth area and a lower end of the seventh area;
the third detecting electrode extends between an upper end of the fifth area and a lower end of the sixth area, the third detecting electrode being configured to output a third electrostatic capacity value depending on the position of the surface of the liquid; **and**
the controller is further configured to determine presence or absence of a temporal variation of the third electrostatic capacity value.

6. The liquid surface detecting device according to any one of claims 1 to 5, wherein each of the plurality of detecting electrodes is positioned on an identical side surface of the container.

7. The liquid surface detecting device according to any one of claims 1 to 6, further comprising:
a base substrate; **and**
a detection circuit connected to each of the plurality of detecting electrodes, the detection circuit being configured to send the first electrostatic capacity value and the second electrostatic capacity value to the controller, wherein:
each of the plurality of detecting electrodes and the detection circuit are mounted on the base substrate.

8. The liquid surface detecting device according to claim 7, wherein:
the detection circuit has connecting channels configured to be connected with the plurality of detecting electrodes; **and**
a number of the connecting channels is smaller than a number of areas defined in the internal space of the container for performing the detecting of the surface of the liquid by the liquid surface detecting device,
preferably wherein:
in a state in which a mounting surface of the base substrate mounted with the plurality of detecting electrodes abuts against an outer side surface **of the container;**
the detection circuit is positioned above the second detecting electrode;
the second detecting electrode is positioned on a side of the first detecting electrode opposite to the detection circuit in a direction orthogonal to an up-down direction and extending within the mounting surface; **and**
a wiring connecting the first detecting electrode and the detection circuit, is shorter than a wiring connecting the second detecting electrode and the detection circuit,
more preferably wherein the detection circuit is positioned on an outer side as compared with an outer edge of the container as viewed in a plan view of the mounting surface.

9. The liquid surface detecting device according to any one of claims 7 or 8, further comprising a pressing plate arranged on a side of the base substrate opposite to the container, the pressing plate being configured to press the base substrate against the container,
and/or wherein the detection circuit is grounded.

10. The liquid surface detecting device according to any one of claims 1 to 9, further comprising:
a plurality of guard electrodes, wherein:
areas in which the plurality of guard electrodes extends and areas in which the plurality of detecting electrodes extends are respectively identical to each other in an up-down direction, or the plurality of guard electrodes is positioned on a side of the plurality of detecting electrodes, respectively, in a direction orthogonal to the up-down direction,
preferably wherein the areas in which the plurality of guard electrodes extends and the areas in which the plurality of detecting electrodes extends are respectively identical to each other in the up-down direction, and the plurality of guard electrodes is positioned on the side of the plurality of detecting electrodes, respectively, in the direction orthogonal to the up-down direction.

11. The liquid surface detecting device according to any one of claims 1 to 10, wherein the lower end of the first area is coincident with the upper end of the second area,
and/or
wherein:
the container includes a base and at least one extension, a volume of the internal space being changeable depending on a number of the extension; **and**
the plurality of detecting electrodes is positioned on the base,
and/or
wherein:
a liquid flow port configured to flow the liquid and an air flow port configured to flow air existing above the liquid are formed on a surface defining the internal space **of the container;**
an uppermost detecting electrode, of the plurality of detecting electrodes, positioned uppermost among the plurality of detecting electrodes is arranged adjacent to the air flow port in an up-down direction in order to prevent the liquid from entering into the air flow port by detecting approach of the surface of the liquid with respect to the air flow port; **and**
a lowermost detecting electrode, of the plurality of detecting electrodes, positioned lowermost among the plurality of detecting electrodes, is arranged adjacent to the liquid flow port in the up-down direction in order to prevent the air from entering into the liquid flow port by detecting approach of the surface of the liquid with respect to the liquid flow port.

12. A liquid surface detecting method for detecting a surface of a liquid retained in an internal space of a container, by a controller connected to a first detecting electrode and a second detecting electrode, the internal space including a first area and a second area defined below the first area, the liquid surface detecting method comprising:
determining presence or absence of a temporal variation of a first electrostatic capacity value depending on a position of the surface of the liquid, the first electrostatic capacity value being outputted by the first detecting electrode positioned in an external space of the container or in the internal space of the container, the first detecting electrode extending at least between an upper end of the first area and a lower end of the first area; **and**
determining presence or absence of a temporal variation of a second electrostatic capacity value depending on the position of the surface of the liquid, the second electrostatic capacity value being outputted by the second detecting electrode positioned in the external space of the container or in the internal space of the container, the second detecting electrode extending at least between an upper end of the second area and a lower end of the second area.

13. The liquid surface detecting method according to claim 12, wherein:
the internal space further includes a third area defined below the second area and a fourth area defined below the third area;
the first detecting electrode extends between the upper end of the first area and the lower end of the first area; **and**
the second detecting electrode extends between the upper end of the second area and the lower end of the third area,
the liquid surface detecting method further comprising determining presence or absence of a temporal variation of a third electrostatic capacity value depending on the position of the surface of the liquid, the third electrostatic capacity value being outputted by a third detecting electrode positioned in the external space of the container or in the internal space of the container, the third detecting electrode extending between an upper end of the third area and a lower end of the fourth area.

14. The liquid surface detecting method according to claim 12 or 13, further comprising:
performing supply detection of detecting the surface of the liquid by determining the presence or absence of the temporal variation of the first electrostatic capacity value and the presence or absence of the temporal variation of the second electrostatic capacity value while supplying the liquid to the internal space; **and**
performing discharge detection of detecting the surface of the liquid by determining the presence or absence of the temporal variation of the first electrostatic capacity value and the presence or absence of the temporal variation of the second electrostatic capacity value while discharging the liquid from the internal space, in a case that the surface of the liquid has not been detected even after performing the supply detection for a first period of time.

15. The liquid surface detecting method according to claim 14, further comprising changing the first period of time to a second period of time longer than the first period of time, in a case that an amount of the liquid retained in the internal space is not more than a predetermined amount.
